# EUROPEAN PATENT APPLICATION

(11) **EP 4 826 780 A1**
(43) Date of publication of application: **21.10.2026**
(21) Application number: 24903856.3
(22) Date of filing: 26.06.2024
(51) Int. Cl.: H01M 4/136, H01M 4/58, H01M 4/62, H01M 4/66, H01M 4/36, H01M 10/0562, H01M 10/0585, H01M 10/052, H01M 4/02

(54) **POSITIVE ELECTRODE AND ALL-SOLID SECONDARY BATTERY COMPRISING SAME**

(30) Priority: 13.12.2023 KR 20230181150
(71) Applicant: SAMSUNG SDI CO., LTD., Yongin-si, Gyeonggi-do 17084 (KR)
(72) Inventor: SON, In Hyuk, Yongin-Si Gyeonggi-do 17084 (KR); JO, Sung Nim, Yongin-Si Gyeonggi-do 17084 (KR); SHIM, Kyu Eun, Yongin-Si Gyeonggi-do 17084 (KR); LIM, Hyung Sub, Yongin-Si Gyeonggi-do 17084 (KR); PARK, Tae Hyun, Yongin-Si Gyeonggi-do 17084 (KR); LEE, Ji Eun, Yongin-Si Gyeonggi-do 17084 (KR)
(74) Representative: Michalski Hüttermann & Partner mbB
(86) International application number: PCT/KR2024/008922
(87) International publication number: WO 2025/127285

(57) **Abstract**

Disclosed are a cathode and an all-solid-state secondary battery including the same, the cathode including: a cathode current collector; and a cathode active material layer containing a lithium sulfide-based cathode active material and an inorganic filler and disposed on one side or both sides of the cathode current collector, wherein the inorganic filler is a lithium metal oxyhalide represented by Formula 1 below:

<Formula 1> LiₐAl_{b}M_{c}O_{d}Clₑ

In Formula 1, 0<a≤3, 0<b≤3, 0≤c<2, 0<d≤4, 0<e≤4, d<e, and M is a metal selected from Groups 3 to 15.

## Description

### Technical Field

The present disclosure relates to a cathode and an all-solid-state secondary battery including the same.

### Background Art

Recently, due to industrial demands, the development of batteries with high energy density and safety is actively underway. For example, lithium batteries are used in a variety of applications, including information devices, communication devices, and automobiles. Since automobiles impact human lives, safety is also important.

Lithium batteries employing liquid electrolytes may have an increased risk of fire and/or explosion in the event of a short circuit. All-solid-state secondary batteries employing solid electrolytes instead of liquid electrolytes have been proposed. Solid electrolytes have a lower likelihood of ignition than liquid electrolytes.

All-solid-state secondary batteries can reduce the risk of fire or explosion by employing solid electrolytes instead of liquid electrolytes, and can provide improved safety.

When lithium sulfide is used as a cathode active material for all-solid-state secondary batteries, ithium sulfide is an insulator with almost no electrical and ionic conductivity, so a material having high electrical and ionic conductivity is needed when manufacturing a cathode. In addition, since no solvent is used when manufacturing a cathode containing lithium sulfide, an electrolyte layer, and an anode, the solid electrolyte layer, the cathode, and the anode substantially contain no solvent, resulting in low electronic conductivity and lithium-ion conductivity, thereby making it impossible to secure sufficient capacity during charging and discharging. Therefore, it is important to design an interface in a cathode active material layer to enable active electrochemical reactions between a cathode active material and other components.

### Disclosure of Invention

### Technical Problem

An aspect is to provide a cathode with improved initial efficiency and capacity by reinforcing a network of a lithium sulfide-based cathode active material and components of a cathode active material layer and improving cathode side reactions.

Another aspect is to provide an all-solid-state secondary battery with improved capacity, lifespan characteristics, and high-rate characteristics by employing the above-described cathode.

### Solution to Problem

According to an aspect,
there is provided a cathode including: a cathode current collector; and a cathode active material layer containing a lithium sulfide-based cathode active material and an inorganic filler and disposed on one side or both sides of the cathode current collector,
wherein the inorganic filler is a lithium metal oxyhalide represented by Formula 1 below:

   <Formula 1> LiₐAl_{b}M_{c}O_{d}Clₑ

   in Formula 1, 0<a≤3, 0<b≤3, 0≤c<2, 0<d≤4, 0<e≤4, d<e, and M is a metal selected from groups 3 to 15.

According to another aspect, there is provided an all-solid-state secondary battery including: a cathode layer; an anode layer; and an electrolyte layer between the cathode layer and the anode layer, wherein the cathode layer is the above-described cathode.

### Advantageous Effects of Invention

According to an aspect, there is provided a cathode that enables capacity, lifespan, and low-voltage operation by strengthening an ionic and electronic network between a lithium sulfide-based cathode active material and a solid electrolyte using a viscoelastic inorganic filler and that improves initial efficiency and specific capacity by improving high-voltage cathode side reactions. When using such a cathode, high-rate characteristics are improved, and a cathode overvoltage is minimized, thereby providing an all-solid-state secondary battery with improved capacity retention rate and charge/discharge characteristics.

### Brief Description of Drawings

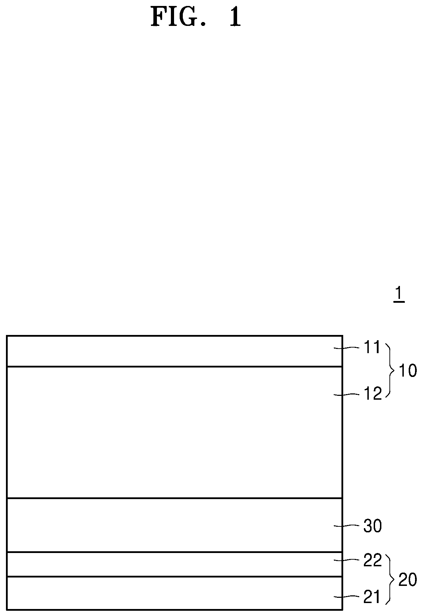

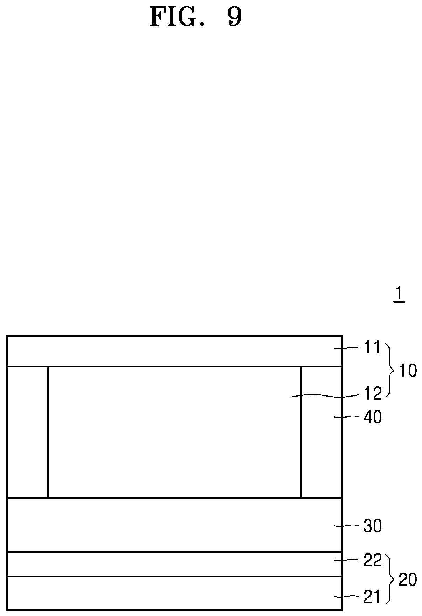

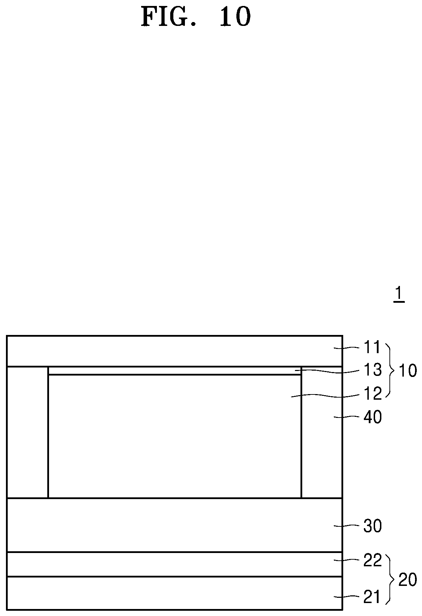

FIGS. 1 to 10 are cross-sectional views of an all-solid-state secondary battery according to an exemplary embodiment.

### <List of Reference Numerals for Major Elements>

| | | | |
|---|---|---|---|
| 10 | cathode | 11 | cathode current collector |
| 12 | cathode active material layer | 20 | anode |
| 21 | anode current collector | 22 | first anode active material layer |
| 30 | electrolyte layer | 40 | inactive member |

### Best Mode for Carrying out the Invention

Unless otherwise defined, all terms (including technical and scientific terms) used in the present disclosure have the same meaning as that commonly understood by one of those skilled in the art to which the present disclosure belongs. Further, the terms defined in commonly used dictionaries should be interpreted as having a meaning consistent with their meaning within the context of the relevant art and the present disclosure, and should not be interpreted in an idealized or overly formal sense.

Exemplary embodiments are described in the present disclosure with reference to cross-sectional views which are schematic views of idealized embodiments. In this way, for example, variations from the shapes of the drawings may be expected as a result of manufacturing techniques and/or tolerances. Therefore, embodiments described in the present disclosure should not be construed as being limited to the specific shapes of regions as illustrated in the drawings of the present disclosure, and should include, for example, deviations in shapes resulting from manufacturing. For example, a region illustrated or described as flat may typically have rough and/or non-linear features. Further, sharply illustrated angles may be round. Accordingly, the regions illustrated in the drawings are schematic in nature, and their shapes are not intended to illustrate the precise shape of the regions and are not intended to limit the scope of this disclosure.

The present inventive concept may be embodied in many different forms and should not be construed as limited to the embodiments described in the present disclosure. These embodiments are provided so that the present disclosure will be made thoroughly and completely, and are provided to fully transfer the scope of the present inventive concept to those skilled in the art. Identical reference numerals refer to identical components.

When a component is referred to as being "over" another component, it can be understood that it may be directly on another component, or that there may be other components intervening therebetween. In contrast, when a component is said to be "directly on" another component, there are no intervening component therebetween.

The terms "first," "second," "third," etc. may be used herein to describe various components, ingredients, regions, layers, and/or zones, these components, ingredients, regions, layers, and/or zones should not be limited by these terms. These terms are used only to distinguish one component, ingredient, region, layer or zone from another component, ingredient, region, layer or zone. Accordingly, a first component, ingredient, region, layer or zone described below may be referred to as a second component, ingredient, region, layer or zone without departing from the teachings of the present disclosure.

The terms used in the present disclosure is for the purpose of describing specific embodiments only and is not intended to limit the present inventive concept. The singular form used in the present application is intended to include the plural form including "at least one" unless the context clearly dictates otherwise. "At least one" should not be construed as limiting to the singular. As used in the present disclosure, the term "and/or" includes any and all combinations of one or more of the listed items. The terms "include" and/or "including" as used in the detailed description specify stated features, regions, integers, steps, operations, components and/or ingredients, but do not preclude the presence or addition of one or more other features, regions, integers, steps, operations, components and/or ingredients.

Spatially relative terms such as "bottom," "below," "lower," "upper," "top," and the like may be used herein to easily describe the relationship of one component or feature to another component or feature. It will be understood that spatially relative terms are intended to include different directions of a device when used or operated in addition to the directions illustrated in the drawings. For example, if the device in the drawing is overturned, a component described as being "under" or "below" another component or feature would be oriented "above" the other component or feature. Thus, the exemplary term "below" may include both upward and downward directions. The above device may be placed in other directions (rotated 90 degrees or in other directions), and the spatially relative terms used in the present disclosure may be interpreted accordingly.

The "group" refers to a group of the periodic table of elements according to the International Union of Pure and Applied Chemistry ("IUPAC") Group 1 to18 classification system.

In the present disclosure, the "particle size" refers to an average diameter when particles are spherical and refers to an average major axis length when the particles are non-spherical. The particle size may be measured using a particle size analyzer (PSA). The "particle size" is, for example, an average particle size. The "average particle size" is, for example, a median particle diameter, D50.

D50 is a size of the particle corresponding to 50% of the cumulative volume, calculated from the side of the particle with the smaller particle size in the size distribution of the particles measured by laser diffraction, and D90 is a size of the particle corresponding to 90% of the cumulative volume, calculated from the side of the particle with the smaller particle size in the size distribution of the particles measured by laser diffraction. Further, D10 is a size of the particle corresponding to 10% of the cumulative volume, calculated from the side of the particle with the smaller particle size in the size distribution of the particles measured by laser diffraction.

In the present disclosure, the "metal" includes both metals and metalloids such as silicon and germanium, in either an elemental or ionic state, and the "alloy" refers to a mixture of two or more metals.

In the present disclosure, the "electrode active material" refers to an electrode material capable of undergoing lithiation and delithiation.

In the present disclosure, the "cathode active material" refers to a cathode material capable of undergoing lithiation and delithiation, and the "anode active material" refers to an anode material capable of undergoing lithiation and delithiation.

In the present disclosure, the "lithiation" and "lithiating" refer to a process of adding lithium to an electrode active material, and the "delithiation" and "delithiating" refer to a process of removing lithium from an electrode active material.

In the present disclosure, the "charge" and "charging" refer to a process of providing electrochemical energy to a battery, and the "discharge" and "discharging" refer to a process of removing electrochemical energy from a battery.

In the present disclosure, the "positive electrode" or "cathode" refers to an electrode where electrochemical reduction and lithiation occur during a discharge process, and the "negative electrode" or "anode" refers to an electrode where electrochemical oxidation and delithiation occur during a discharge process.

In the present disclosure, the "thickness" and "length" refer to "average thickness" and "average length".

In the present disclosure, the aspect ratio refers to a ratio (L1/L2) of the major axis length L1 (e.g., length) and the minor axis length L2 (e.g., diameter). Here, the aspect ratio, major axis length, minor axis length, length, and diameter refer to an average aspect ratio, an average major axis length, an average minor axis length, an average length, and an average diameter. The aspect ratio can be evaluated using a scanning electron microscope.

In this specification, the "solid solution" is different from a mixture of two or more chemical species and refers to a homogeneous crystalline phase containing two or more chemical species.

Although specific embodiments have been described, alternatives, modifications, variations, improvements, and substantial equivalents, which are not currently anticipated or cannot be anticipated, may occur to the applicant or those skilled in the art. Accordingly, the appended claims, as filed and as amended, are intended to include all such alternatives, modifications, variations, improvements and substantial equivalents.

Hereinafter, according to exemplary embodiments, a cathode, and all-solid-state secondary battery including the same will be described in more detail.

Since lithium sulfide (Li₂S) is an insulator with almost no electrical conductivity, in order to use it as a cathode active material, a problem caused by its low electrical conductivity should be resolved by compounding it with a carbon material that has high electrical conductivity. Further, in an all-solid-state secondary battery using a lithium sulfide-based cathode active material, a solid electrolyte layer, a cathode, and an anode substantially do not contain a solvent, and thus electronic conductivity and lithium-ion conductivity are low, thereby making it impossible to secure sufficient capacity during charging and discharging. Therefore, it is important to design an interface in a cathode active material layer to enable active electrochemical reactions between a cathode active material and a solid electrolyte.

For low-voltage operation of an all-solid-state secondary battery, it is required that high-voltage oxidation stability and mechanical network stability at the interface between the active material and the solid electrolyte be improved simultaneously. In the present disclosure, for this purpose, an inorganic filler having viscoelasticity and high-voltage oxidation stability is used.

A cathode according to an embodiment includes: a cathode current collector; and a cathode active material layer containing a lithium sulfide-based cathode active material and an inorganic filler and disposed on one side or both sides of the cathode current collector, wherein the inorganic filler includes a compound represented by Formula 1 below.

<Formula 1> LiₐAl_{b}M_{c}O_{d}Clₑ

in Formula 1, 0<a≤3, 0<b≤3, 0≤c<2, 0<d≤4, 0<e≤4, d<e, and M is a metal selected from groups 3 to 15.

The cathode contains the above-described inorganic filler, thereby suppressing an increase in interfacial resistance between components constituting a composite cathode active material, which can improve the charge and discharge characteristics of an all-solid-state secondary battery. The inorganic filler may have elasticity. Since the inorganic filler has elasticity, it is possible to more effectively accommodate a volume change in the cathode active material layer containing the composite cathode active material. Further, since the inorganic filler is easily molded into various shapes, it can easily fill the pores formed in the cathode active material layer. As an increase in internal resistance caused by the pores in the cathode active material layer containing the composite cathode active material is suppressed, an increase in internal resistance of the all-solid-state secondary battery can be suppressed. As a result, the charge and discharge characteristics of the all-solid-state secondary battery can be improved.

Since the cathode active material layer includes the inorganic filler, it can provide improved durability against a potential change, a temperature change, etc. that occur during a charging and discharging process, compared to a cathode active material layer including an organic filler. Compared to an organic filler, the inorganic filler can suppress the degradation of the all-solid-state secondary battery during the charging and discharging process. As a result, the charge and discharge characteristics of the all-solid-state secondary battery can be improved.

The inorganic filler may have, for example, ionic conductivity. Since the inorganic filler has ionic conductivity, an increase in internal resistance of the cathode active material layer caused by the inorganic filler can be suppressed, and an increase in internal resistance of the all-solid-state secondary battery can be suppressed. As a result, the charge and discharge characteristics of the all-solid-state secondary battery can be improved.

The inorganic filler may be, for example, amorphous. The inorganic filler may be, for example, an amorphous lithium metal oxyhalide. After preparing a crystalline inorganic filler, the crystalline inorganic filler is melted to obtain a molten salt, and then the molten salt is cooled to prepare an amorphous inorganic filler. Alternatively, an amorphous inorganic filler may be directly prepared by controlling a composition during the manufacturing of an inorganic filler. After preparing a crystalline lithium metal oxyhalide, the crystalline lithium metal oxyhalide is melted to obtain a molten salt, and then the molten salt is cooled to prepare an amorphous lithium metal oxyhalide. Alternatively, an amorphous lithium metal oxyhalide may be directly prepared by controlling a composition during the manufacturing of a lithium metal oxyhalide. The amorphous inorganic filler may have, for example, ductility. Since the amorphous inorganic filler has flexibility, it can more effectively accommodate a volume change during charging and discharging of the all-solid-state secondary battery 1. In contrast, the crystalline lithium metal oxyhalide may relatively have brittleness compared to the amorphous lithium metal oxyhalide. The amorphousness of the inorganic filler may be confirmed using an XRD spectrum.

The Inorganic filler may be, for example, glassy. The inorganic filler may be, for example, a glassy lithium metal oxyhalide having a glass transition temperature (Tg). The glassy lithium metal oxyhalide may have ductility. Since the inorganic filler has ductility, it can effectively accommodate a volume change of the all-solid-state secondary battery 1 during charging and discharging, or can easily deform according to the volume change of the all-solid-state secondary battery 1.

The glass transition temperature of the inorganic filler may be, for example, 20°C or lower, 10°C or lower, 0°C or lower, or -10°C or lower. Among inorganic fillers, the compound of Formula 1 above has a low melting point and a low glass transition temperature due to oxygen substitution, thereby making it easy to process and allowing it to be deformed into a continuous form without defects. Since the inorganic filler has such a low glass transition temperature, it can be easily transitioned from a brittle crystalline metal salt state to a soft glassy state. For example, the inorganic filler can be easily transitioned from a crystalline molten salt state to a glassy state by melting and then cooling this inorganic filler, . Alternatively, a glassy state may be obtained during the preparation process of the inorganic filler. The glass transition temperature may be measured using, for example, a Differential Scanning Calorimeter (DSC). The glass transition temperature may be measured using, for example, a Dynamic Mechanical Analyzer (DMA).

The melting point of the inorganic filler may be, for example, 300°C or lower, 250°C or lower, 200°C or lower, or 150°C or lower. In addition, the inorganic filler has a low melting temperature of 50 to 250°C, for example, 100 to 150°C or 110 to 130°C, thereby making it applicable to the manufacturing process of an all-solid-state secondary battery and highly mass-producible. In addition, the inorganic filler has high ionic conductivity of 10⁻⁵ to 10⁻² S/cm, 10⁻³ to 10⁻² S/cm, or 1.5 mS/cm at room temperature (25°C), so it has high mass production capability. Since the inorganic filler has such a low melting point, an amorphous inorganic filler can be easily prepared by melting the inorganic filler to obtain a molten salt and then cooling the molten salt. The melting point of the inorganic filler may be measured using, for example, a differential scanning calorimeter (DSC).

The compound of Formula 1, which is an inorganic filler, has a structure in which some chlorine (Cl) is substituted with oxygen (O), and becomes amorphous through oxygen substitution, thereby increasing its ionic conductivity and viscoelasticity. It is possible to manufacture a flexible film similar to a polymer when O/Al in Formula 1 is 70 to 85%, 71 to 83%, 73 to 80%, for example, 75%.

The elastic modulus of the inorganic filler may be 10 GPa or less, 5 GPa or less, 3 GPa or less, or 2 GPa or less at 30°C. The elastic modulus of the inorganic filler and the elastic modulus of the first solid electrolyte may be measured using, for example, a Dynamic Mechanical Analyzer (DMA).

The inorganic filler may have, for example, viscoelasticity. The inorganic filler may have, for example, a viscoelastic creep rate. The viscoelastic creep rate of the inorganic filler may be, for example, 1×10⁻⁴ %/s or more, 2×10⁻⁴ %/s or more, or 4×10⁻⁴ %/s or more. %/s is a ratio of deformed size to initial size per unit of time (second). Since the inorganic filler has viscoelasticity, it can easily accommodate a volume change during charging and discharging of the all-solid-state secondary battery 1 and can continuously deform its shape without defects. The creep rate is a rate of change over time of an inorganic filler subjected to stress at a constant temperature, i.e., a deformation rate. The creep rate may be measured using, for example, a universal test machine.

The inorganic filler may have ionic conductivity. The inorganic filler may have an ionic conductivity of, for example, 0.1 mS/cm or more, 0.3 mS/cm or more, 0.5 mS/cm or more, 0.7 mS/cm or more, or 1.0 mS/cm or more at 25°C and 1 atm. Ionic conductivity may be measured by AC impedance analysis. The voltage amplitude used for AC impedance analysis may be 5 to 10 mV, and the frequency used for AC impedance analysis may be 1 MHz to 1 Hz. Since the inorganic filler has ionic conductivity, it can effectively suppress an increase in interfacial resistance between the cathode active material particles within the cathode active material layer, and/or between the cathode active material and the first solid electrolyte.

When applying a composite cathode active material containing an inorganic filler to a cathode active material layer, electronic and ionic networks of a lithium sulfide-based cathode active material and a solid electrolyte is enhanced, thereby enabling capacity, lifespan, and low-voltage operation and improving a high-voltage cathode side reaction. An all-solid-state secondary battery employing such a cathode active material layer may reduce capacity degradation, for example, at 1.5V or higher, or at 1.0 to 1.5V, thereby improving its specific capacity and initial efficiency. In particular, due to the infiltration characteristics with an argyrodite-type solid electrolyte layer, dendrite formation at high power is reduced, and cracks of the cathode active material layer is reduced, thereby improving the lifespan characteristics of the all-solid-state secondary battery. In addition, when configuring a cathode with a thick film thickness that achieves high energy density, the degradation of high-rate characteristics is improved, the occurrence of short circuits during rapid charging is reduced, and the short circuit phenomenon is reduced due to the reduction of pinholes in the solid electrolyte layer. Therefore, an elastic sheet ratio can be reduced, so battery coupling pressure can be lowered to 2.5 M or less, 2 MPa or less, 0.1 to 2 MPa, or 0.15 to 1 MPa, thereby making it possible to implement a free-standing cell.

In Formula 1 above, M is at least one selected from B, Al, Fe, Ga, In, As, Sb, and Mo.

The compound of Formula 1 is an inorganic filler with viscoelasticity similar to that of a polymer, has excellent processability, and decomposes into Al₂O₃ and MAlCl₄ during an operation at high voltage to act as an anodic oxide film, thereby improve high-voltage oxidation stability of a cathode to enable high-voltage charging. As such, the inorganic filler of Formula 1 is an inorganic amorphous and/or glassy inorganic filler having high high-voltage oxidation stability and high viscoelasticity. Here, high voltage refers to, for example, 4.3 V or higher.

The compound of Formula 1 above includes LiₐAl_{b}O_{d}Clₑ (0<a≤3; 0<b≤3; 0≤c<2; 0<d≤4;
0<e≤3; d<e), LiₐAl_{b}Fe_{c}O_{d}Clₑ (0<a≤3; 0<b≤3; 0≤c<2; 0<d≤4; 0<e≤3; d<e),
LiₐAl_{b}Ga_{c}O_{d}Clₑ (0<a≤3; 0<b≤3; 0≤c<2; 0<d≤4; 0<e≤3; d<e), LiₐAl_{b}In_{c}O_{d}Clₑ (0<a≤3; 0<b≤3; 0≤c<2; 0<d≤4; 0<e≤3; d<e), LiₐAl_{b}As_{c}O_{d}Clₑ (0<a≤3; 0<b≤3; 0≤c<2; 0<d≤4; 0<e≤3; d<e), LiₐAl_{b}Sb_{c}O_{d}Clₑ (0<a≤3; 0<b≤3; 0≤c<2; 0<d≤4; 0<e≤3; d<e), LiₐAl_{b}Mo_{c}O_{d}Clₑ (0<a≤3; 0<b≤3; 0≤c<2; 0<d≤4; 0<e≤3; d<e), LiₐAl_{b}Bi_{c}O_{d}Clₑ (0<a≤3; 0<b≤3; 0≤c<2; 0<d≤4; 0<e≤3; d<e), LiₐAl_{b}B_{c}O_{d}Clₑ (0<a≤3; 0<b≤3; 0≤c<2; 0<d≤4; 0<e≤3; d<e), or a combinatiom thereof.

Lithium metal oxyhalide may include, for example, LiAlₓO_{z}Cl_{w} (0<x≤2; 0<z≤1; 2<w<4; z<w), LiAlₓFe_{y}O_{z}Cl_{w} (0<x≤2; 0≤y<1; 0<z≤1; 2<w<4; z<w), LiAlₓGa_{y}O_{z}Cl_{w} (0<x≤2; 0≤y<1; 0<z≤1; 2<w<4; z<w), LiAlₓIn_{y}O_{z}Cl_{w} (0<x≤2; 0≤y<1; 0<z≤1; 2<w<4; z<w), LiAlₓAs_{y}O_{z}Cl_{w} (0<x≤2; 0≤y<1; 0<z≤1; 2<w<4; z<w), LiAlₓSb_{y}O_{z}Cl_{w} (0<x≤2; 0≤y<1; 0<z≤1; 2<w<4; z<w), LiAlₓMo_{y}O_{z}Cl_{w} (0<x≤2; 0≤y<1; 0<z≤1; 2<w<4; z<w), LiAlₓBi_{y}O_{z}Cl_{w} (0<x≤2; 0≤y<1; 0<z≤1; 2<w<4; z<w), LiAlₓB_{y}O_{z}Cl_{w} (0<x≤2; 0≤y<1; 0<z≤1; 2<w<4; z<w), or a combination thereof.

The compound of Formula 1 is, for example, LiAlO₀.₇₅Cl₂.5, LiAl₁.₃O₁.₁Cl₂.7, LiAl₁.₂₅As₀.₀₉O₁.₁₈Cl₂.₆₆, or a combination thereof.

The lithium sulfide-based cathode active material is Li₂S, a Li₂S composite, or a combination thereof.

The Li₂S composite is a composite of Li₂S and a lithium salt, a composite of Li₂S and a carbon-based material, a composite of Li₂S, a carbon-based material and a solid electrolyte, a composite of Li₂S and a solid electrolyte, a composite of Li₂S, and a carbon-based material and a lithium salt, a composite of Li₂S and a lithium salt, a composite of Li₂S and a metal carbide, a composite of Li₂S, a carbon-based material and a metal carbide, a composite of Li₂S and a metal nitride, a composite of Li₂S, a carbon-based material and a metal nitride, or a combination thereof.

The composite of Li₂S and a lithium salt is, for example, a resulting product of mechanical milling of Li₂S and a lithium salt. The composite of Li₂S and a lithium salt is distinguished from a simple mixture of Li₂S and a lithium salt, for example, because it is a resulting product of a mechanochemical reaction between Li₂S and a lithium salt. The simple mixture of Li₂S and a lithium salt provides high interfacial resistance because it fails to maintain a dense interface between Li₂S and a lithium salt, thereby resulting in increasing the internal resistance of a solid electrolyte separator.

The composite of Li₂S and a lithium salt is represented by Li₂S-LiₐX_{b} (1≤a≤5, 1≤b≤5). X is I, Br, Cl, F, H, O, Se, Te, N, P, As, Sb, Al, B, OCl, PF₆, BF₄, SbF₆, AsF₆, ClO₄, AlO₂, AlCl₄, NO₃, CO₃, BH₄, SO₄, BO₃, PO₄, NCl, NCl₂, BN₂, or a combination thereof. a is, for example, 1, 2, 3, 4, or 5. b is, for example, 1, 2, 3, 4, or 5. The lithium salt is, for example, a compound that does not include sulfur (S). The lithium salt may be, for example, a binary compound or a ternary compound. The lithium salt may be, for example, a binary compound composed of lithium and one element selected from Groups 13 to 17 of the Periodic Table of Elements. The lithium salt may be, for example, a ternary compound composed of lithium and two elements selected from Groups 13 to 17 of the Periodic Table of Elements. The binary compound may include, for example, LiI, LiBr, LiCl, LiF, LiH, Li₂O, Li₂Se, Li₂Te, Li₃N, Li₃P, Li₃As, Li₃Sb, Li₃Al₂, LiB₃, or a combination thereof. The ionic conductivity of the composite can be further improved by including such a binary compound in the composite. The internal resistance of the cathode can be further reduced by including such a composite in the cathode. As a result, the cycle characteristics of an all-solid-state secondary battery including such a cathode can be further improved. The ternary compound may include, for example, Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof. The ionic conductivity of the composite can be further improved by including such a ternary compound in the composite The internal resistance of the cathode can be further reduced by including such a composite in the cathode. As a result, the cycle characteristics of an all-solid-state secondary battery including such a solid electrolyte separator can be further improved.

In the composite, any carbon-based material containing carbon atoms and used as a conductive material in the relevant technical field may be used. The carbon-based materials may be, for example, crystalline carbon, amorphous carbon, or a combination thereof. The carbon-based material may be, for example, a sintered product of a carbon precursor. The carbon-based material may be, for example, carbon nanostructures. The carbon nanostructures may be, for example, one-dimensional carbon nanostructures, two-dimensional carbon nanostructures, three-dimensional carbon nanostructures, or a combination thereof. The carbon nanostructures may be, for example, carbon nanotubes, carbon nanofibers, carbon nanobelts, carbon nanorods, graphene, or a combination thereof. The carbon-based materials may be, for example, a porous carbon-based material or a non-porous carbon-based material. The porous carbon-based material may include, for example, periodic and regular two-dimensional or three-dimensional pores. The porous carbon-based material may be, for example, carbon black such as ketjen black, acetylene black, denka black, thermal black, or channel black; graphite; activated carbon; or a combination thereof. The shape of the carbon-based material may be, for example, a particle shape, a sheet shape, a flake shape, or the like, but is not limited thereto; and any shape used as a carbon-based material in the relevant technical field is possible.

The composite is a composite of Li₂S, a lithium salt, and a carbon-based material.

The content of the carbon-based material included in the composite of Li₂S, a lithium salt, and a carbon-based material may be, for example, 1 to 20 wt%, 5 to 20 wt%, or 10 to 20 wt% of the total weight of the composite. When the content of the carbon-based material increases excessively, the energy density of a dry cathode film and an all-solid-state secondary battery may decrease. When the content of the carbon-based material decreases excessively, the electronic conductivity of the composite of Li₂S, a lithium salt, and a carbon-based material, and thus the internal resistance of a dry cathode film may increase. As a result, the cycle characteristics of the all-solid-state secondary battery may deteriorate.

The Mohs hardness of a lithium salt and a carbon-based material may be greater than that of Li₂S, respectively. The Mohs hardness of Li₂S is, for example, 0.6 or less. The Mohs hardness of the lithium salt may be 0.7 or more, 0.8 or more, 0.9 or more, 1.0 or more, 1.5 or more, or 2.0 or more. Since the lithium salt has a Mohs hardness in this range, the grinding of Li₂S can be performed more easily during a milling process, and a solid solution of Li₂S and a lithium salt can be formed more easily. The Mohs hardness of LiI is, for example, 2.0. The Mohs hardness of the carbon-based material may be 0.7 or higher, 0.8 or more, 0.9 or more, 1.0 or more, 1.2 or more, or 1.5 or more. Since the carbon-based material has a Mohs hardness in this range, the grinding of Li₂S can be performed more easily during a milling process, and a composite of Li₂S, a lithium salt, and a carbon-based material can be formed more easily. The Mohs hardness of carbon nanofiber (CNF) is, for example, 1.5.

The carbon-based materials may include, for example, a fibrous carbon-based material. Since the composite of Li₂S, a lithium salt, and a carbon-based material includes a fibrous carbon-based material, the electronic conductivity of the composite of Li₂S, a lithium salt, and a carbon-based material can be further improved. Since the composite of Li₂S, a lithium salt, and a carbon-based material includes a fibrous carbon-based material, the electronic conduction from the surface to the interior of the composite of Li₂S, a lithium salt, and a carbon-based material can be performed more easily. The internal resistance of a dry cathode film including the composite of Li₂S, a lithium salt, and a carbon-based material can be reduced, and the cycle characteristics of an all-solid-state secondary battery containing the dry cathode film can be further improved.

The aspect ratio of the fibrous carbon-based material may be, for example, 2 or more, 3 or more, 4 or more, 5 or more, 10 or more, or 20 or more. The aspect ratio of the fibrous carbon-based material may be, for example, 2 to 30, 3 to 30, 4 to 30, 5 to 30, 10 to 30, or 20 to 30. The aspect ratio of the fibrous carbon-based material may be, for example, 2 to 30, 2 to 20, 2 to 10, 2 to 8, 2 to 5, or 2 to 4. Since the fibrous carbon-based material has an aspect ratio within this range, the overall electronic conductivity of the composite of Li₂S, a lithium salt, and a carbon-based material can be improved, and the imbalance in local electronic conductivity within the composite of Li₂S, a lithium salt, and a carbon-based material can be further alleviated.

The fibrous carbon-based materials may include, for example, carbon nanostructures. The carbon nanostructures may include, for example, carbon nanofibers (CNF), carbon nanotubes (CNT), carbon nanobelts, carbon nanorods, or a combination thereof.

The carbon nanostructures may form a primary carbon nanostructure composed of a single carbon nanostructure and a secondary carbon nanostructure composed of multiple aggregated carbon nanostructures.

The diameter of the primary carbon nanostructure may be, for example, 1 nm to 200 nm, 1 nm to 150 nm, 1 nm to 100 nm, 1 nm to 50 nm, 1 nm to 30 nm, or 1 nm to 20 nm. The length of the primary carbon nanostructure may be, for example, 10 nm to 2 µm, 10 nm to 1.5 µm, 10 nm to 1 µm, 10 nm to 500 nm, 10 nm to 400 nm, 10 nm to 300 nm, 10 nm to 200 nm, or 10 nm to 100 nm. The diameter and length of the primary carbon nanostructure may be measured from scanning electron microscope (SEM) or transmission electron microscope (TEM) images. Alternatively, the diameter and/or length of the primary carbon nanostructure may be measured by laser diffraction.

The secondary carbon nanostructure is, for example, a structure formed by wholly or partially assembling the primary carbon nanostructures to form a bundle or cluster shape. The secondary carbon nanostructure may include, for example, a bundle-type carbon nanostructure, a rope-type carbon nanostructure, or a combination thereof. The diameter of the secondary carbon nanostructure may be, for example, 2 nm to 200 nm, 3 nm to 150 nm, 5 nm to 100 nm, 5 nm to 50 nm, 5 nm to 30 nm, or 5 nm to 20 nm. The length of the secondary carbon nanotube structure may be, for example, 20 nm to 2 µm, 30 nm to 1.5 µm, 50 nm to 1 µm, 50 nm to 500 nm, 50 nm to 400 nm, 50 nm to 300 nm, 50 nm to 200 nm, or 50 nm to 100 nm or more. The diameter and length of the secondary carbon nanostructure may be measured from scanning electron microscope (SEM) images or optical microscope images. Alternatively, the diameter and/or length of the secondary carbon nanostructure may be measured by laser diffraction. The secondary carbon nanostructure may be converted into primary carbon nanostructures by dispersing them in a solvent, and then used to prepare a composite of Li₂S, a lithium salt, and a carbon-based material.

The composite of Li₂S and a lithium salt, or the composite of Li₂S, a lithium salt, and a carbon-based material, may include, for example, a solid solution of Li₂S and a lithium salt. Since the composite includes a solid solution of Li₂S and a lithium salt, the ionic conductivity of the composite can increase. For example, since the solid solution of Li₂S and a lithium salt includes lithium ions disposed within Li₂S crystallites, the ionic conductivity of the solid solution of Li₂S and a lithium salt can be improved compared to the ionic conductivity of Li₂S. As a result, the ionic conductivity of the composite can be improved, and the internal resistance of the composite can be reduced. Since the cathode includes such a composite, the internal resistance of the cathode can be further reduced. As a result, the cycle characteristics of an all-solid-state secondary battery including such a cathode can be further improved.

The size of the Li₂S crystallites obtained from the XRD spectrum of the composite of Li₂S and a lithium salt or the composite of Li₂S, a lithium salt, and a carbon-based material may be, for example, 20 nm or less, 15 nm or less, or 10 nm or less. The size of the Li₂S crystallites obtained from the XRD spectrum of the composite may be, for example, 1 to 20 nm, 1 to 15 nm, or 3 to 10 nm. Since the size of the Li₂S crystallites decreases, the contact area between Li₂S and a lithium salt can be further increased. Since the contact area between Li₂S and a lithium salt further increases, the ionic conductivity of the composite of Li₂S and a lithium salt can further increase. Since the cathode includes such a composite, the internal resistance of the cathode can be further reduced. As a result, the cycle characteristics of an all-solid-state secondary battery including such a cathode can be further improved.

Since Li₂S has low ionic conductivity, a composite with a lithium salt is formed to overcome this disadvantage. The composite of Li₂S and a lithium salt, or the composite of Li₂S, a lithium salt, and a carbon-based material can provide improved ionic conductivity compared to Li₂S alone. The content of Li₂S in the composite is 50 to 95 wt%, 50 to 90 wt%, 50 to 80 wt%, or 50 to 70 wt% of the total weight of the composite of Li₂S and a lithium salt. Since the composite has a Li₂S content within this range, it is possible to manufacture a cathode with improved ion conductivity and durability. The content of a lithium salt in the composite of Li₂S and a lithium salt may be 5 to 50 wt%, 10 to 50 wt%, 20 to 50 wt%, or 30 to 50 wt% of the total weight of the composite of Li₂S and a lithium salt.

The molar ratio of Li₂S to a lithium salt in the composite may be, for example, 50:50 to 95:5, 60:40 to 95:5, 60:40 to 90:10, 65:35 to 90:10, 65:35 to 85:15, or 70:30 to 85:15. The molar ratio of Li₂S to a lithium salt in the composite may be, for example, 50:50 to 95:5, 50:50 to 90:10, 50:50 to 85:15, 50:50 to 80:20, 50:50 to 75:25, or 50:50 to 70:30. Since the Li₂S and lithium salt has a molar ration within this range, the cycle characteristics of a lithium battery including a composite cathode active material can be further improved. When the molar ratio of Li₂S is excessively high, the effect of improving ionic conductivity by a lithium salt may be slight. When the molar ratio of Li₂S is excessively high, the energy density of a lithium battery including a composite cathode active material may decrease.

The content of a lithium salt In the composite of Li₂S, a lithium salt, and a carbon-based material may be, for example, 1 to 40 wt%, 5 to 35 wt%, 10 to 35 wt%, 15 to 35 wt%, 20 to 35 wt%, or 25 to 35 wt% of the total weight of the composite of Li₂S, a lithium salt, and a carbon-based material. When the content of a lithium salt increases excessively, the energy density of an all-solid-state secondary battery may decrease. When the content of a lithium salt is excessively low, the ionic conductivity of the composite of Li₂S, a lithium salt, and a carbon-based material may decrease, and thus the internal resistance of a dry cathode film may increase. As a result, the cycle characteristics of an all-solid-state secondary battery including the dry cathode film may be deteriorated.

The molar ratio of Li₂S to a lithium salt in the composite of Li₂S, a lithium salt, and a carbon-based material may be, for example, 50:50 to 95:5, 60:40 to 95:5, 60:40 to 90:10, 65:35 to 90:10, 65:35 to 85:15, or 70:30 to 85:15. The molar ratio of Li₂S to a lithium salt in the composite of Li₂S, a lithium salt, and a carbon-based material may be, for example, 50:50 to 95:5, 50:50 to 90:10, 50:50 to 85:15, 50:50 to 80:20, 50:50 to 75:25, or 50:50 to 70:30. Since the Li₂S and lithium salt has a molar ration within this range, the cycle characteristics of all-solid-state lithium battery including a dry cathode film can be further improved. When the molar ratio of Li₂S is excessively high, the effect of improving ionic conductivity by a lithium salt may be slight. When the molar ratio of Li₂S is excessively high, the energy density of a lithium battery including a composite cathode active material may decrease.

The ionic conductivity of the composite of Li₂S and a lithium salt or the composite of Li₂S, a lithium salt, and a carbon-based material may be, for example, 1×10-5 S/cm or more, 2×10-5 S/cm or more, 4×10-5 S/cm or more, 6×10-5 S/cm or more, 8×10-5 S/cm or more, or 1×10-4 S/cm or more at 25 °C. The ionic conductivity may be measured using, for example, electrochemical impedance spectrometry, DC polarization method, etc. Since the composite of Li₂S and a lithium salt has ionic conductivity within this range, the internal resistance of a cathode including the composite of Li₂S and a lithium salt can be further reduced. The cycle characteristics of an all-solid-state secondary battery including the cathode can be improved.

The Li₂S-containing composite may further include a solid electrolyte. The solid electrolyte may further include a sulfide-based solid electrolyte.

The content of the composite of Li₂S and a lithium salt may be, for example, 0.1 to 20 wt%, 0.5 to 20 wt%, 0.5 to 15 wt%, 0.5 to 10 wt%, or 1 to 5 wt% of the total weight of the composite of Li₂S and a lithium salt and the sulfide-based solid electrolyte. The content of the composite of Li₂S and a lithium salt may be, for example, 0.1 to 20 wt%, 0.5 to 20 wt%, 0.5 to 15 wt%, 0.5 to 10 wt%, or 1 to 5 wt% of the total weight of the cathode. When the cathode has a content of the composite of Li₂S and a lithium salt within this range, the durability of the cathode can be further improved, and the internal resistance of the cathode can be further reduced.

In the composite, the metal carbide is, for example, a two-dimensional metal carbide. The two-dimensional metal carbide is, for example, MXenes. The two-dimensional metal carbide is represented by, for example, Mₙ₊₁CₙTₓ (M is a transition metal, T is a terminal group, T is O, OH and/or F, n=1, 2, or 3, and x is the number of terminal groups). The two-dimensional metal carbide is, for example, Ti₂CTₓ, (Ti₀.5, Nb₀.₅)₂CTₓ, Nb₂CTₓ, V₂CTₓ, Ti₃C₂Tₓ, (V₀.5, Cr₀.₅)₃C₂Tₓ, Ti₃CNTₓ, Ta₄C₃Tₓ, Nb₄C₃Tₓ, or a combination thereof. The surface of the two-dimensional metal carbides is terminated with O, OH and/or F.

In the composite, the metal nitride is, for example, a two-dimensional metal nitride. The two-dimensional metal nitride is represented by, for example, Mₙ₊₁NₙTₓ (M is a transition metal, T is a terminal group, T is O, OH and/or F, n=1, 2, or 3, and x is the number of terminal groups). The surface of the two-dimensional metal nitride is terminated with O, OH and/or F.

According to an embodiment, the cathode active material layer may further include at least one selected from a binder, a conductive material, and a lithium salt.

The conductive material includes a carbon-based material, the carbon-based material is amorphous, the carbon-based material includes a fibrous carbon-based material, the fibrous carbon-based material includes a fibrous carbon nanostructure, and the fibrous carbon nanostructure includes carbon nanofibers, carbon nanotubes, carbon nanobelts, carbon nanorods, or a combination thereof.

When the cathode active material layer contains a fibrous carbon-based material as a conductive material, the content of the conductive material is 1 to 15 wt%, 5 to 15 wt%, or 8 to 12 wt% based on 100 parts by weight of the cathode active material layer. When the cathode active material of the cathode active material layer contains Li₂S and the compound of Formula 1 as is an inorganic filler, the cathode active material layer includes a carbon nanofiber, which is a fibrous carbon-based material, as a conductive material to manufacture a cathode with excellent ionic conductivity and electronic conductivity.

In the cathode active material layer, the content of the inorganic filler is 1 to 40 wt%, 5 to 40 wt%, or 20 to 40 wt%, the content of the lithium sulfide-based cathode active material is 50 to 90 wt%, 50 to 80 wt%, or 50 to 70 wt%, and the content of the binder is 1 to 10 wt%, 1 to 5 wt%, or 1 to 3 wt%, based on the total weight of the cathode active material layer. When the content of the inorganic filler is within the above range, there may be an all-solid-state secondary battery in which low-voltage operation is possible by enhancing the ionic and electronic networks between the lithium sulfide-based cathode active material and the solid electrolyte, initial efficiency and specific capacity are improved by the improvement of high-voltage cathode side reactions, and high-rate characteristics and lifespan characteristics are improved.

The cathode active material layer according to an embodiment may include a lithium sulfide-based cathode active material, an inorganic filler, and a conductive material. As the conductive material, for example, carbon nanofibers (CNF), which are a fibrous carbon-based material, may be included. And, the cathode active material layer may further contain a lithium salt. LiI may be used as an example of the lithium salt. According to an embodiment, the content of the lithium sulfide-based cathode active material in the cathode active material layer is 50 to 70 wt% based on the total weight of the cathode active material layer, the content of the inorganic filler or the inorganic filler and lithium salt is 20 to 40 wt% based on the total weight of the cathode active material layer, and the content of the conductive material is 10 to 20 wt% based on the total weight of the cathode active material layer.

The cathode active material layer may further include a first solid electrolyte.

The first solid electrolyte includes a sulfide-based solid electrolyte. The content of the first solid electrolyte is smaller than the content of the inorganic filler, and the weight ratio of the inorganic filler to the first solid electrolyte is 99:1 to 51:49.

The size of the Li₂S composite particles may be, for example, 10 µm or less, 8 µm or less, 5 µm or less, 2 µm or less, 1.5 µm or less, or 1 µm or less. The size of the composite particles may be, for example, 1 to 10 µm, 2 to 10 µm, 2 to 8 µm, or 3 to 8 µm. The size of the composite particles may be, for example, 0.1 to 10 µm, 0.1 to 8 µm, 0.1 to 5 µm, 0.1 to 2 µm, 0.1 to 1.5 µm, or 0.1 to 1 µm or less. Since the Li₂S composite particles have a size within this range, they may be more easily placed in the voids between multiple sulfide-based solid electrolytes, the formation of pinholes within the cathode is suppressed, and the internal resistance of the cathode may be reduced. As a result, the durability of the cathode can be improved. The size of the Li₂S composite particles may be measured using, for example, laser diffraction, scanning electron microscopy, etc. The size of the composite of Li₂S and a lithium salt is, for example, an arithmetic mean of the particle diameters of multiple particles measured using software in scanning electron microscope images.

The size of the Li₂S particles included in the composite cathode active material, that is, the size of the Li₂S particles included in the composite, may be, for example, 2 µm or less, 1.5 µm or less, or 1 µm or less. The size of the Li₂S particles may be, for example, 0.1 to 2 µm, 0.1 to 1.5 µm, 0.1 to 1 µm, or 10 to 100 nm. Since the Li₂S particles have a size within this range, a volume change during charging and discharging is suppressed, so the degradation of the composite cathode active material including the composite during charging and discharging can be suppressed. When the size of the Li₂S particles increases excessively, the deterioration of the composite cathode active material including the composite may be accelerated due to an increase in volume change of the composite during charging and discharging. As a result, the cycle characteristics of an all-solid-state secondary battery including such a composite cathode active material may be deteriorated.

When using a cathode containing the above-described composite, it is not necessary to use a lithium metal anode as the anode, thereby enabling the use of an anode-free all-solid-state secondary battery and thus providing an all-solid-state secondary battery with improved energy density. In addition, since the composite cathode active material includes such a composite, the cycle characteristics of an all-solid-state secondary battery including the composite cathode active material can be improved. For example, the high-rate characteristics of an all-solid-state secondary battery including such a composite cathode active material can be improved.

The cathode active material layer may further include a lithium salt. When the cathode active material layer includes a lithium salt, a cathode with further improved ionic conductivity can be manufactured. The lithium salt may be the same as the lithium salt contained in the Li₂S composite.

The solid electrolyte in the cathode active material layer may be, for example, a sulfide-based solid electrolyte. The solid electrolyte included in the cathode may be the same as or different from the solid electrolyte included in the electrolyte layer. The solid electrolyte included in the cathode active material layer may have a smaller average particle size D50 than the solid electrolyte included in the electrolyte layer. For example, the average particle size D50 of the solid electrolyte included in the cathode active material layer may be 90% or less, 80% or less, 70% or less, 60% or less, 50% or less, 40% or less, 30% or less, or 20% or less of the average particle size D50 of the solid electrolyte included in the electrolyte layer. The average particle size D50 is, for example, a median particle diameter D50. The median particle diameter D50 is a size of the particle corresponding to 50% of the cumulative volume, calculated from the side of the particle with the smaller particle size in the size distribution of the particles measured by laser diffraction.

Referring to FIGS. 1 to 10, an all-solid-state secondary battery 1 includes a cathode layer 10; an anode layer 20; and a solid electrolyte layer 30 between the cathode layer 10 and the anode layer 20. The cathode layer 10 includes a cathode current collector 11 and a cathode active material layer 12 on one side or both sides of the cathode current collector 11. The cathode active material layer 12 includes a lithium sulfide-based cathode active material and an inorganic filler. The inorganic filler includes a lithium metal oxyhalide represented by Formula 1 above. The anode layer 20 includes an anode current collector 21 and a first anode active material layer 22 on one side of the anode current collector 21.

### [Cathode layer]

Referring to FIGS. 1 to 10, a cathode 10 includes a cathode current collector 11 and a cathode active material layer 12 on one side or both sides of the cathode current collector 11.

### [Interlayer]

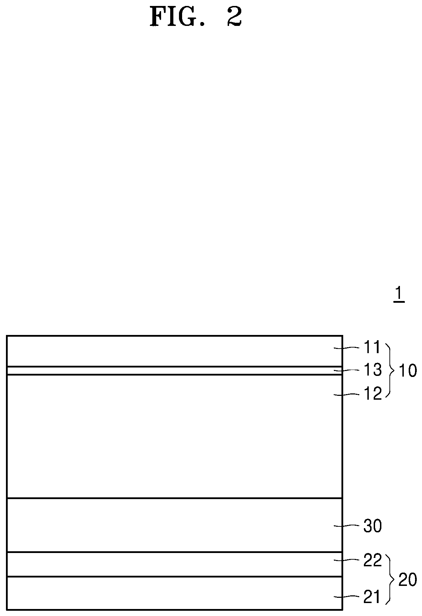

Referring to FIGS. 2, 4, 6, 8, and 10, the cathode 10 further includes an interlayer 13 disposed between the cathode current collector 11 and the cathode active material layer 12. Since the inorganic filler represented by Formula 1 contained in the cathode active material layer can cause the corrosion of a current collector, the corrosion of the current collector can be prevented when further containing the interlayer.

The interlayer 13 is disposed directly on, for example, one or both sides of the cathode current collector 11. Another layer may not be disposed between the cathode current collector 11 and the interlayer 13. Since the interlayer 13 is disposed directly on one or both sides of the cathode current collector 11, the binding strength between the cathode current collector 11 and the cathode active material layer 12 can be further improved Since the interlayer 13 is disposed between the cathode current collector 11 and the cathode active material layer 12, side reactions between the inorganic filler and/or the first solid electrolyte and the cathode current collector 11 can be more effectively suppressed. Therefore, the deterioration of the all-solid-state secondary battery 1 during the charging and discharging process can be suppressed, and the cycle characteristics of the all-solid-state secondary battery 1 can be further improved.

The thickness of the interlayer 13 is, for example, 0.01 to 20%, 0.1 to 20%, 0.5 to 20%, 1 to 20%, 1 to 15%, 1 to 10%, 2 to 8%, or 3 to 7% of the thickness of the cathode current collector 11. The thickness of the interlayer 13 is, for example, 10 nm to 10 µm, 10 nm to 5 µm, 50 nm to 5 µm, 200 nm to 4 µm, 500 nm to 3 µm, 500 nm to 2 µm, 500 nm to 1.5 µm, and 700 nm to 1.3 µm. Since the interlayer 13 has a thickness within this range, the binding strength between the cathode current collector 11 and the cathode active material layer 12 is further improved, and an increase in interfacial resistance is suppressed. The thickness of the interlayer may be measured from, for example, scanning electron microscope (SEM) images of a cross-section of the interlayer.

The interlayer 13 includes, for example, a carbon-based conductive material. The carbon-based conductive material included in the interlayer 13 may be selected from the carbon-based conductive materials used in the cathode active material layer 12. The interlayer 13 may include the same carbon-based conductive material as the carbon-based conductive material used in the cathode active material layer 12. Since the interlayer 13 includes a carbon-based conductive material, the interlayer 13 may be, for example, a conductive layer.

The carbon-based conductive material may include, for example, natural graphite, artificial graphite, carbon black, acetylene black, ketjen black, carbon fiber, carbon nanotube, graphene, porous carbon, or a combination thereof.

The interlayer 13 may additionally include, for example, a binder. Since the interlayer 13 additionally includes a binder, the binding strength between the cathode current collector 11 and the cathode active material layer 12 can be further improved The binder included in the interlayer 13 is, for example, a conductive binder or a nonconductive binder. The conductive binder is, for example, an ion-conductive binder and/or an electron-conductive binder. A binder having both ionic conductivity and electronic conductivity may belong to both an ion-conductive binder and an electron-conductive binder.

The binder included in the interlayer 13 may be selected from the binders used in the cathode active material layer 12. The interlayer 13 may include the same binder as the binder used in the cathode active material layer 12. The binder included in the interlayer 13 is, for example, a fluorine-based binder. The fluorine-based binder included in the interlayer 13 is, for example, polyvinylidene fluoride (PVDF), polytetrafluoroethylene (PTFE), or a combination thereof. The interlayer 13 may be, for example, a binding layer including a binder. The interlayer 13 may be, for example, a conductive layer including a binder and a carbon-based conductive material.

The interlayer 13 may be disposed on the cathode current collector 11 in a dry or wet manner. The interlayer 13 may be disposed on the cathode current collector 11 in a dry manner by deposition such as CVD, PVD, or the like. The interlayer 13 may be disposed on the cathode current collector 11 in a wet manner by spin coating, dip coating, or the like. The interlayer 13 may be disposed on the cathode current collector 11 by depositing a carbon-based conductive material onto a substrate by deposition. The dry-coated interlayer 13 is made of a carbon-based conductive material and may not include a binder. The interlayer 13 may be disposed on the cathode current collector 11 by applying a composition including a carbon-based conductive material, a binder, and a solvent on the surface of an electrode current collector and drying the applied composition. The interlayer 13 may have a single-layer structure or a multi-layer structure including a plurality of layers. The multi-layer structure may be a 2-layer structure, a 3-layer structure, a 4-layer structure, or the like.

Referring to FIGS. 1, 3, 5, 7 and 9, in the cathode 10, the cathode active material layer 12 may be disposed directly on the cathode current collector 11. Another layer, for example, an interlayer, may not be disposed between the cathode current collector 11 and the cathode active material layer 12.

In the cathode layer 10 in which the cathode active material layer 12 is disposed directly on the cathode current collector 11, the cathode current collector 11 may be inactive to an inorganic filler. The cathode current collector 11 may not cause a side reaction with the inorganic filler. The cathode current collector 11 may include, for example, tungsten (W).

### [Cathode active material Layer: Inorganic filler]

Referring to FIGS. 1 to 10, the cathode active material layer 12 includes an inorganic filler. The inorganic filler includes a lithium metal oxyhalide represented by LiₐAl_{b}M_{c}O_{d}Clₑ (0<a≤3; 0<b≤3; 0≤c<2; 0<d≤2; 0<e≤4; d<e, M is a metal selected from Groups 3 to 15 of the periodic table).

The content of the inorganic filler included in the cathode active material layer 12 may be, for example, 0.1 to 20 wt%, 0.1 to 10 wt%, or 0.1 to 5 wt% of the total weight of the cathode active material layer 12.

### [Cathode active material layer: Cathode active material]

The cathode active material layer 12 contains a lithium sulfide-based positive active material.

The shape of the cathode electrode active material is, for example, a particle shape such as a sphere, ellipse, or the like. The particle size of the cathode active material is not particularly limited and is within a range applicable to the cathode active materials of conventional all-solid-state secondary batteries. The content of the cathode active material in the cathode 10 is not particularly limited and is within a range applicable to the cathodes of conventional all-solid-state secondary batteries. The content of the cathode active material included in the cathode active material layer 12 may be, for example, 30 wt% to 99 wt%, 30 wt% to 90 wt%, 30 wt% to 80 wt%, 30 wt% to 70 wt%, or 30 wt% to 50 wt% of the total weight of the cathode active material layer 12.

### [Cathode active material layer: First solid electrolyte]

The cathode active material layer 12 may include a first solid electrolyte.

Referring to FIGS. 1 to 10, the cathode active material layer 12 includes a first solid electrolyte. The first solid electrolyte included in the cathode active material layer 12 may be the same as or different from the solid electrolyte included in the solid electrolyte layer 30.

The first solid electrolyte included in the cathode active material layer 12 may have a smaller average particle size D50 than the solid electrolyte included in the solid electrolyte layer 30. For example, the average particle size D50 of the first solid electrolyte included in the cathode active material layer 12 may be 90% or less, 80% or less, 70% or less, 60% or less, 50% or less, 40% or less, 30% or less, or 20% or less of the average particle size D50 of the solid electrolyte included in the solid electrolyte layer 30. The average particle size D50 is, for example, a median particle diameter D50. The median particle diameter D50 is a size of the particle corresponding to 50% of the cumulative volume, calculated from the side of the particle with the smaller particle size in the size distribution of the particles measured by laser diffraction.

The content of the first solid electrolyte included in the cathode active material layer 12 may be, for example, 1 wt% to 40 wt%, 1 wt% to 30 wt%, 1 wt% to 20 wt%, or 1 wt% to 10 wt% of the total weight of the cathode active material layer 12.

The first solid electrolyte may be, for example, a sulfide-based solid electrolyte. The sulfide-based solid electrolyte is at least one selected from Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are each a positive number, and Z is one of Ge, Zn, and Ga), Li₂S-GeS₂, Li₂S-SiS₂-Li₃PO₄, Li₂S-SiS₂-LiₚMO_{q} (p and q are each a positive number, and M is one of P, Si, Ge, B, Al, Ga, and In), Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). The sulfide-based solid electrolyte is prepared by treating starting materials such as Li₂S and P₂S₅ using a melt quenching method or a mechanical milling method. After this treatment, heat treatment may be performed. The solid electrolyte may be amorphous, crystalline, or a mixed state thereof. In addition, the solid electrolyte may include, for example, sulfur (S), phosphorus (P), and lithium (Li) as at least constituent elements among the above-described sulfide-based solid electrolyte materials. For example, the solid electrolyte may be a material including Li₂S-P₂S₅. When using a sulfide-based solid electrolyte material including Li₂S-P₂S₅ for forming the solid electrolyte, the mixed molar ratio of Li₂S and P₂S₅ is, for example, in the range of Li₂S: P₂S₅ = 20:80 to 90:10, 25:75 to 90:10, 30:70 to 70:30, 40:60 to 60:40.

The sulfide-based solid electrolyte may include, for example, an argyrodite type solid electrolyte represented by Formula 2 below.

<Formula 2> Li⁺₁₂₋ₙ₋ₓAⁿ⁺X²⁻₆₋ₓY⁻ₓ

In the Formula, A is P, As, Ge, Ga, Sb, Si, Sn, Al, In, Ti, V, Nb, or Ta, X is S, Se, or Te, Y is Cl, Br, I, F, CN, OCN, SCN, or N₃, and 1≤n≤5, 0≤x≤2. The sulfide-based solid electrolyte may be, for example, an argyrodite-type compound including at least one selected from Li₇₋ₓPS₆₋ₓClₓ, 0≤x≤2, Li₇₋ₓPS₆₋ₓBrₓ, 0≤x≤2, and Li₇₋ₓPS₆₋ₓIₓ, 0≤x≤2. The sulfide-based solid electrolyte may be, for example, an argyrodite-type compound including at least one selected from Li₆PS₅Cl, Li₆PS₅Br, and Li₆PS₅I.

The density of the argyrodite-type solid electrolyte may be 1.5 to 2.0 g/cc. Since the argyrodite-type solid electrolyte has a density of 1.5 g/cc or more, the internal resistance of an all-solid-state secondary battery is reduced, and the penetration of the electrolyte layer by Li can be effectively suppressed.

### [Cathode active material layer: Binder]

The cathode active material layer 12 may further include a binder. The binder may be, but is not limited to, styrene butadiene rubber (SBR), polytetrafluoroethylene, polyvinylidene fluoride, polyethylene, etc., and any binder used in the relevant technical field may be used. The content of the binder included in the cathode active material layer 12 may be, for example, 0.1 wt% to 10 wt%, 0.5 to 5 wt%, or 0.5 to 2 wt% of the total weight of the cathode active material layer 12. The binder may be omitted.

### [Cathode active material layer: Conductive material]

The cathode active material layer 12 may further include a conductive material. The conductive material may be, for example, a carbon-based material, a metal-based material, or a combination thereof.

The content of the conductive material included in the cathode active material layer 12 may be, for example, 1 wt% to 30 wt%, 1 wt% to 20 wt%, or 1 wt% to 10 wt% of the total weight of the cathode active material layer 12.

The metal-based material may be metal powder, metal fiber, or a combination thereof, but are not limited thereto; any metal-based material used as a conductive material in the relevant technical field is possible.

The carbon-based material may include, for example, amorphous carbon. Since the carbon-based material includes amorphous carbon, side reactions between the carbon-based material and the first solid electrolyte can be suppressed. Therefore, the cycle characteristics of the all-solid-state secondary battery 1 including the carbon-based material can be further improved.

The carbon-based material may be, for example, a sintered product of a carbon precursor. The carbon-based material may be, for example, carbon nanostructures. The carbon nanostructures may be, for example, one-dimensional carbon nanostructures, two-dimensional carbon nanostructures, three-dimensional carbon nanostructures, or a combination thereof. The carbon nanostructures may be, for example, carbon nanotubes, carbon nanofibers, carbon nanobelts, carbon nanorods, graphene, or a combination thereof. The carbon-based materials may be, for example, a porous carbon-based material or a non-porous carbon-based material. The porous carbon-based material may include, for example, periodic and regular two-dimensional or three-dimensional pores. The porous carbon-based material may be, for example, carbon black such as ketjen black, acetylene black, denka black, thermal black, or channel black; graphite; activated carbon; or a combination thereof. The shape of the carbon-based material may be, for example, a particle shape, a sheet shape, a flake shape, or the like, but is not limited thereto; and any shape used as a carbon-based material in the relevant technical field is possible.

The carbon-based material may include, for example, a fibrous carbon-based material. Since the composite includes a fibrous carbon-based material, the electronic conductivity of the composite can be further improved. Since the composite includes a fibrous carbon-based material, the electronic conduction from the surface to the interior of the composite can be performed more easily. The internal resistance of the composite cathode active material including the composite can be reduced, and the cycle characteristics of an all-solid-state secondary battery including the composite cathode active material can be further improved. The aspect ratio of the fibrous carbon-based material may be, for example, 2 or more, 3 or more, 4 or more, 5 or more, 10 or more, or 20 or more. The aspect ratio of the fibrous carbon-based material may be, for example, 2 to 30, 3 to 30, 4 to 30, 5 to 30, 10 to 30, or 20 to 30. The aspect ratio of the fibrous carbon-based material may be, for example, 2 to 30, 2 to 20, 2 to 10, 2 to 8, 2 to 5, or 2 to 4. Since the fibrous carbon-based material has an aspect ratio within this range, the overall electronic conductivity of the composite can be improved, and the imbalance in local electronic conductivity within the composite can be further alleviated. The fibrous carbon-based materials may include, for example, carbon nanostructures. The carbon nanostructures may include, for example, carbon nanofibers (CNF), carbon nanotubes (CNT), carbon nanobelts, carbon nanorods, or a combination thereof. The carbon nanostructures may form a primary carbon nanostructure composed of a single carbon nanostructure and a secondary carbon nanostructure composed of multiple aggregated carbon nanostructures.

The diameter of the primary carbon nanostructure may be, for example, 1 nm to 200 nm, 1 nm to 150 nm, 1 nm to 100 nm, 1 nm to 50 nm, 1 nm to 30 nm, or 1 nm to 20 nm. The length of the primary carbon nanostructure may be, for example, 10 nm to 2 µm, 10 nm to 1.5 µm, 10 nm to 1 µm, 10 nm to 500 nm, 10 nm to 400 nm, 10 nm to 300 nm, 10 nm to 200 nm, or 10 nm to 100 nm. The diameter and length of the primary carbon nanostructure may be measured from scanning electron microscope (SEM) or transmission electron microscope (TEM) images. Alternatively, the diameter and/or length of the primary carbon nanostructure may be measured by laser diffraction.

The secondary carbon nanostructure is, for example, a structure formed by wholly or partially assembling the primary carbon nanostructures to form a bundle or cluster shape. The secondary carbon nanostructure may include, for example, a bundle-type carbon nanostructure, a rope-type carbon nanostructure, or a combination thereof. The diameter of the secondary carbon nanostructure may be, for example, 2 nm to 200 nm, 3 nm to 150 nm, 5 nm to 100 nm, 5 nm to 50 nm, 5 nm to 30 nm, or 5 nm to 20 nm. The length of the secondary carbon nanotube structure may be, for example, 20 nm to 2 µm, 30 nm to 1.5 µm, 50 nm to 1 µm, 50 nm to 500 nm, 50 nm to 400 nm, 50 nm to 300 nm, 50 nm to 200 nm, or 50 nm to 100 nm or more. The diameter and length of the secondary carbon nanostructure may be measured from scanning electron microscope (SEM) images or optical microscope images. Alternatively, the diameter and/or length of the secondary carbon nanostructure may be measured by laser diffraction. The secondary carbon nanostructure may be converted into primary carbon nanostructures by dispersing them in a solvent, and then used to prepare the composite.

### [Cathode active material layer: Other additives]

The cathode active material layer 12 may further include additives such as fillers, coating agents, dispersants, and ion conductive aids in addition to the above-described cathode active material, solid electrolyte, binder, and conductive material.

As fillers, coating agents, dispersants, and ion conductivity aids that can be included in the cathode active material layer 12, known materials generally used in electrodes of all-solid-state secondary batteries may be used.

### [Cathode current collector]

Referring to FIGS. 1 to 10, the cathode layer 10 includes a cathode current collector 11.

As the cathode current collector 11, a plate or foil made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof may be used. The cathode current collector 11 may be omitted. The thickness of the cathode current collector 11 is, for example, 1 µm to 100 µm, 1 µm to 50 µm, 5 µm to 25 µm, or 10 µm to 20 µm.

The cathode current collector 11 may include, for example, a base film and a metal layer disposed on one or both sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. Since the base film includes an insulating thermoplastic polymer, when a short circuit occurs, the base film softens or liquefies, thereby blocking battery operation and suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer acts as an electrochemical fuse, and can thus be cut off in case of overcurrent to prevent short circuits. The limit current and maximum current can be controlled by adjusting the thickness of the metal layer. The metal layer may be plated or deposited on the base film. When the thickness of the metal layer decreases, the limit current and/or maximum current of the cathode current collector 11 decreases, so the stability of a lithium battery during a short circuit can be improved. A lead tab may be added to the metal layer for external connection. The lead tab may be welded to the metal layer or the metal layer/base film laminate by ultrasonic welding, laser welding, spot welding, or the like. During welding, while the base film and/or the metal layer melts, the metal layer may be electrically connected to the lead tab. To make the welding between the metal layer and the lead tab stronger, a metal chip may be added between the metal layer and the lead tab. The metal chip may be a thin piece of the same material as the metal of the metal layer. The metal chip may be, for example, a metal foil, a metal mesh, or the like. The metal chip may be, for example, aluminum foil, copper foil, SUS foil, or the like. Since the metal chip is disposed on the metal layer and then welded with the lead tab, the lead tab may be welded to a metal chip/metal layer laminate or a metal chip/metal layer/base film laminate. During welding, while the base film, the metal layer, and/or the metal chip melts, the metal layer or the metal layer/metal chip laminate may be electrically connected to the lead tab. A metal chip and/or a lead tab may be added onto a portion of the metal layer. The thickness of the base film may be, for example, 1 to 50 µm, 1.5 to 50 µm, 1.5 to 40 µm, or 1 to 30 µm. Since the base film has a thickness within this range, the weight of an electrode assembly may be reduced more effectively. The melting point of the base film may be, for example, from 100 to 300 °C, 100 to 250 °C, or 100 to 200 °C. Since the base film has a melting point within this range, the base film melts during the process of welding the lead tab, and may thus be easily bonded to the lead tab. Surface treatment, such as corona treatment, may be performed on the base film to improve adhesion between the base film and the metal layer. The thickness of the metal layer may be, for example, 0.01 to 3 µm, 0.1 to 3 µm, 0.1 to 2 µm, or 0.1 to 1 µm. Since the metal layer has a thickness within this range, the stability of an electrode assembly may be secured while maintaining conductivity. The thickness of the metal chip may be, for example, 2 to 10 µm, 2 to 7 µm, or 4 to 6 µm. Since the metal piece has a thickness within this range, the connection between the metal layer and the lead tab may be performed more easily. Since the cathode current collector 11 has this structure, the weight of the cathode may be reduced, and as a result, the energy density of the cathode and the all-solid-state secondary battery can be improved.

The cathode current collector is inert to the inorganic filler, and the cathode current collector includes tungsten (W).

### [Inactive member]

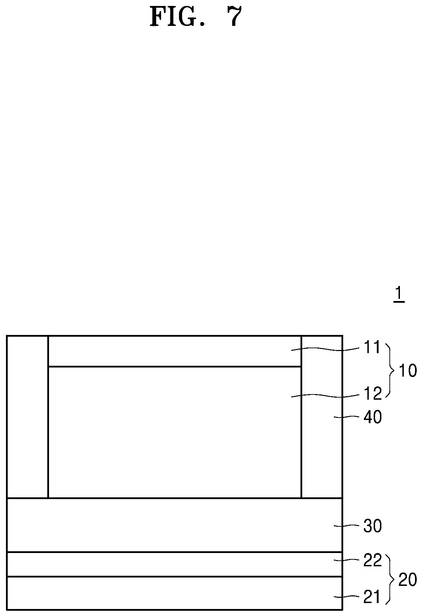

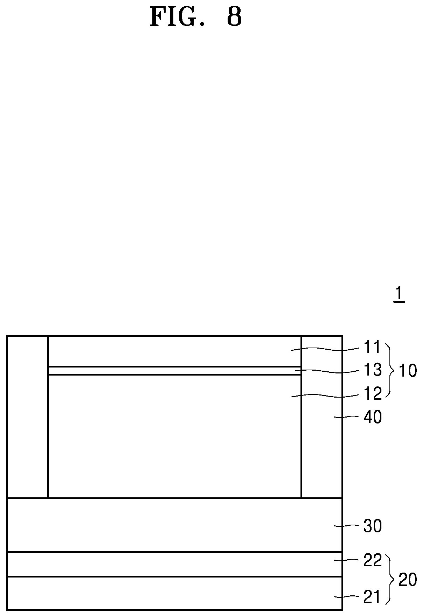

Referring to FIGS. 7 to 9, the cathode 10 includes a cathode current collector 11 and a cathode active material layer 12 disposed on one side of the cathode current collector 11. Referring to FIGS. 8 to 10, the cathode 10 includes a cathode current collector 11, a cathode active material layer 12 disposed on one side of the cathode current collector 11, and an interlayer 13 disposed between the cathode current collector 11 and the cathode active material layer 13.

An inactive member 40 is disposed on one side surface of the cathode 10. Referring to FIGS. 7 and 8, the inactive member 40 is disposed on one side surface of the cathode active material layer 12 and one side surface of the cathode current collector 11. Referring to FIGS. 9 and 10, the active member 40 is disposed on one side surface of the cathode active material layer 12 and is disposed between the solid electrolyte layer 30 and the cathode current collector 11 facing the solid electrolyte layer 30. The inactive member 40 may not be disposed on one side surface of the cathode current collector 11. The electrolyte layer 30 may be, for example, a solid electrolyte layer.

Since the cathode 10 includes the inactive member 40, cracks of the solid electrolyte layer 30 is prevented during the manufacturing and/or charging and discharging of the all-solid-state secondary battery 1, resulting in improved cycle characteristics of the all-solid-state secondary battery 1. In the all-solid-state secondary battery 1 that does not include the inactive member 40, when manufacturing and charging and/or discharging the all-solid-state secondary battery 1, uneven pressure is applied to the electrolyte layer 30 in contact with the cathode 10, thereby increasing the possibility of a short circuit occurring due to cracks occurring in the electrolyte layer 30 and the growth of lithium metal through the cracks.

In the all-solid-state secondary battery 1, the thickness of the inactive member 40 is greater than or equal to the thickness of the cathode active material layer 12. Alternatively, in the all-solid-state secondary battery 1, the thickness of the inactive member 40 is substantially equal to the thickness of the cathode 10. Since the thickness of the inactive member 40 is equal to the thickness of the cathode 10, a uniform pressure is applied between the cathode 10 and the electrolyte layer 30, and the cathode 10 and the electrolyte layer 30 are sufficiently adhered to each other, so that the interfacial resistance between the cathode 10 and the electrolyte layer 30 can be reduced. In addition, since the electrolyte layer 30 is sufficiently sintered during the process of manufacturing the all-solid-state secondary battery 1 by pressing, the internal resistance of the electrolyte layer 30 and the all-solid-state secondary battery 1 including the same is reduced.

The inactive member 40 surrounds the side surface of the cathode 10 and comes into contact with the electrolyte layer 30. Since the inactive member 40 surrounds the side surface of the cathode 10 and comes into contact with the solid electrolyte layer 30, cracks of the electrolyte layer 30 that occur due to a pressure difference during the pressing process in the electrolyte layer 30 that does not come into contact with the cathode 10 can be effectively suppressed. The inactive member 40 surrounds the side surface of the cathode 10 and is separated from the anode 20, more specifically, the first anode active material layer 22. The inactive member 40 surrounds the side surface of the cathode 10, comes into contact with the electrolyte layer 30, and is separated from the anode 20. Accordingly, the possibility of a short circuit occurring due to the physical contact between the cathode 10 and the first anode active material layer 22 or due to the overcharging of lithium is suppressed. For example, the inactive member 40 is disposed on one side surface of the cathode active material layer 12 and, at the same time, is disposed on one surface of the cathode current collector 11, thereby more effectively suppressing the possibility of a short circuit occurring due to the contact between the cathode current collector 11 and the anode 20.

Referring to FIGS. 7 to 10, the inactive member 40 extends from one side surface of the cathode 30 to the end portion of the electrolyte layer 30. Since the inactive member 40 extends to the end portion of the electrolyte layer 30, cracks occurring at the end portion of the electrolyte layer 30 may be suppressed. The end portion of the electrolyte layer 30 is an outermost portion that comes into contact with the side surface of the electrolyte layer 30. The inactive member 40 extends to the outermost portion that comes into contact with the side surface of the electrolyte layer 30. The inactive member 40 is separated from the anode 20, more specifically, from the first anode active material layer 22. The inactive member 40 extends to the end portion of the electrolyte layer 30, but does not come into contact with the anode 20. The inactive member 40 fills a space extending from one side surface of the cathode 30 to the end portion of the electrolyte layer 30.

Referring to FIGS. 7 to 10, the width of the inactive member 40 extending from one side surface of the cathode 10 to the end of the electrolyte layer 30 is, for example, 1 to 30 %, 1 to 25 %, 1 to 20 %, 1 to 15 %, 1 to 10 %, or 1 to 5 % of the width between one side surface of cathode 10 and the other side surface facing the one side surface thereof. When the width of the inactive member 40 is too large, the energy density of the all-solid-state secondary battery 1 decreases. When the width of the inactive member 40 is too small, the effect of disposing the inactive member 40 is slight.

The area of the cathode 10 is smaller than the area of the electrolyte layer 30 in contact with the cathode 10. The inactive member 40 is disposed to surround the side surface of the cathode 10 to compensate for a difference between the area of the cathode 10 and the area of the electrolyte layer 30. Since the area of the inactive member 40 compensates for the difference between the area of the cathode 10 and the area of the electrolyte layer 30, cracks in the electrolyte layer 30 that occur due to the pressure difference during the pressing process are effectively suppressed. For example, the sum of the area of the cathode 10 and the area of the inactive member 40 is equal to the area of the electrolyte layer 30. The electrolyte layer 30 may be, for example, a solid electrolyte layer.

The area of the cathode 10 is, for example, less than 100%, 99% or less, 98% or less, 97% or less, 96% or less, or 95% or less of the area of the electrolyte layer 30. The area of the cathode 10 is, for example, less than 50% to 100%, 50% to 99%, 55% to 98%, 60% to 97%, 70% to 96%, 80% to 95%, or 85% to 95% of the area of the electrolyte layer 30.

When the area of the cathode 10 is equal to or larger than the area of the electrolyte layer 30, the possibility of a short circuit occurring due to physical contact between the cathode 10 and the first anode active material layer 22 or overcharging of lithium increases. The area of the cathode 10 is, for example, equal to the area of the cathode active material layer 12. The area of the cathode 10 is, for example, equal to the area of the cathode current collector 11.

The area of the inactive member 40 is, for example, 50% or less, 40% or less, 30% or less, 20% or less, or 10% or less of the area of the cathode 10. The area of the inactive member 40 is, for example, 1% to 50%, 5% to 40%, 5% to 30%, 5% to 20%, or 5% to 15% of the area of the cathode 10.

The area (S1) of the cathode 10 is smaller than the area (S4) of the anode current collector 21. The area (S1) of the cathode 10 is, for example, less than 100%, 99% or less, 98% or less, 97% or less, 96% or less, or 95% or less of the area (S4) of the anode current collector 21. The area (S1) of the cathode 10 is, for example, less than 50% to 100%, 50% to 99%, 55% to 98%, 60% to 97%, 70% to 96%, 80% to 95%, or 85% to 95% of the area (S4) of the anode current collector 21. The area (S4) of the anode current collector 21 is, for example, equal to the area of the anode 20. The area (S4) of the anode current collector 21 is, for example, equal to the area of the first anode active material layer 22.

In the present disclosure, the "same" area, length, width, thickness and/or shape includes all instances of having "substantially the same" area, length, width, thickness and/or shape, except where the area, length, width, thickness and/or shape are intentionally different from each other. The "same" area, length, width and/or thickness includes a range where the unintended difference in area, length, width and/or thickness of the objects being compared is, for example, less than 3%, less than 2%, less than 1%, less than 0.5%, or less than 0.1%.

The thickness of the inactive member 40 is, for example, greater than the thickness of the first anode active material layer 22. The thickness of the first anode active material layer 22 is, for example, 50% or less, 40% or less, 30% or less, 20% or less, or 10% or less of the thickness of the inactive member 40. The thickness of the first anode active material layer 22 is, for example, 1% to 50%, 1% to 40%, 1% to 30%, 1% to 20%, or 1% to 10% of the thickness of the inactive member 40.

The inactive member 40 may be a gasket. Since a gasket is used as the inactive member 40, cracks of the electrolyte layer 30 that occur due to a pressure difference during a pressing process can be effectively suppressed.

The inactive member 40 has, for example, a single-layer structure. Alternatively, although not shown in the drawings, the inactive member 40 may have a multilayer structure. In the inactive member 40 having a multilayer structure, each layer may have a different composition. The inactive member having a multilayer structure may have, for example, a two-layer structure, a three-layer structure, a four-layer structure, or a five-layer structure. The inactive member 40 having a multilayer structure may include, for example, at least one adhesive layer and at least one support layer. The adhesive layer effectively prevents a gap between the cathode 10 and the solid electrolyte layer 30 due to a change in the volume of the cathode 10 that occurs during the charging and discharging process of an all-solid-state secondary battery 10, and provides a bonding force between the support layer and another layer, thereby improving the film strength of the inactive member 40. The support layer provides a supporting force to the inactive member 40, prevents unevenness of pressure applied to the electrolyte layer 30 during a pressing process or a charging and discharging process, and prevents the deformation of the all-solid-state secondary battery 1 to be manufactured.

The inactive member 40 is, for example, a flame-retardant inactive member Since the flame-retardant inactive member provides flame retardancy, the possibility of thermal runaway and ignition of the all-solid-state secondary battery 1 can be prevented. As a result, the safety of the all-solid-state secondary battery 1 is further improved. Since the flame-retardant inactive member absorbs residual moisture in the all-solid-state secondary battery 1, the deterioration of the all-solid-state secondary battery 1 is prevented, and thus the lifespan characteristics of the all-solid-state secondary battery 1 are improved.

The flame-retardant inactive member includes, for example, a matrix and a filler. The matrix includes, for example, a substrate and a stiffener. The matrix includes, for example, a fibrous substrate and a fibrous stiffener. The matrix may have elasticity by including a substrate. Therefore, the matrix can effectively accommodate the volume change during charging and discharging of the all-solid-state secondary battery 1 and can be disposed at various positions. The substrate included in the matrix includes, for example, a first fibrous material. Since the substrate includes the first fibrous material, a change in the volume of the cathode 30, occurring during the charging and discharging process of the all-solid-state secondary battery 1, can be effectively accommodated, and the deformation of the inactive member 40 due to the volume change of the cathode 30 may be effectively suppressed. The first fibrous material is, for example, a material having an aspect ratio of 5 or more, 20 or more, or 50 or more. The first fibrous material is, for example, a material having an aspect ratio of 5 to 1000, 20 to 1000, or 50 to 1000. The first fibrous material is, for example, an insulating material. Since the first fibrous material is an insulating material, a short circuit between the cathode 30 and the anode 20 due to lithium dendrites, or the like, occurring during the charging and discharging process of the all-solid-state secondary battery 1, can be effectively prevented. The first fibrous material includes, for example, at least one selected from a pulp fiber, an insulating polymer fiber, and an ion-conducting polymer fiber. Since the matrix includes the stiffener, the strength of the matrix is improved. Therefore, the matrix can prevent an excessive volume change during the charging and discharging of the all-solid-state secondary battery 1 and prevent the deformation of the all-solid-state secondary battery 1. The stiffener included in the matrix includes, for example, a second fibrous material. Since the stiffener includes the second fibrous material, the strength of the matrix can be increased more uniformly. The second fibrous material is, for example, a material having an aspect ratio of 3 or more, 5 or more, or 10 or more. The first fibrous material is, for example, a material having an aspect ratio of 3 to 100, 5 to 100, or 10 to 100. The second fibrous material is, for example, a flame-retardant material. Since the second fibrous material is a flame-retardant material, ignition due to thermal runaway occurring during the charging and discharging process of the all-solid-state secondary battery 1 or due to external impact can be effectively suppressed. The second fibrous material includes, for example, a glass fiber, a metal oxide fiber, a ceramic fiber, or the like.

The flame-retardant inactive member includes a filler in addition to the matrix. The filler may be disposed within the matrix, on the surface of the matrix, or both within the matrix and on the surface of the matrix. The filler is, for example, an inorganic material. The filler included in the flame-retardant inactive member is, for example, a moisture getter. The filler removes moisture remaining in the all-solid-state secondary battery 1 by adsorbing moisture at a temperature of, for example, lower than 100°C, thereby preventing the deterioration of the all-solid-state secondary battery 1. In addition, when the temperature of the all-solid-state secondary battery 1 increases to 150°C or higher due to thermal runaway that occurs during the charging and discharging process of the all-solid-state secondary battery 1 or due to external impact, the filler can effectively suppress the ignition of the all-solid-state secondary battery 1 by desorbing the adsorbed moisture. That is, the filler is, for example, a flame retardant. The filler is, for example, a metal hydroxide having moisture adsorption properties. The metal hydroxide included in the filler is, for example, Mg(OH)₂, Fe(OH)₃, Sb(OH)₃, Sn(OH)₄, TI(OH)₃, Zr(OH)₄, Al(OH)₃, or a combination thereof. The content of the filler included in the flame-retardant inactive member is, for example, 10 to 80 parts by weight, 20 to 80 parts by weight, 30 to 80 parts by weight, 40 to 80 parts by weight, 50 to 80 parts by weight, 60 to 80 parts by weight, or 65 to 80 parts by weight, based on 100 parts by weight of the flame-retardant inactive member.

The flame retardant inactive member may further include, for example, a binder. The binder may include, for example, a curable polymer or a non-curable polymer. The curable polymer is a polymer that is cured by heat and/or pressure. The curable polymer is, for example, solid at room temperature. The flame-retardant inactive member 40 includes, for example, a heat-pressing curable film and/or a cured product thereof. The heat-pressing curable film is, for example, TSA-66 of Toray Co., Ltd.

The flame-retardant inactive member may additionally include other materials in addition to the above-described substrate, stiffener, filler, and binder. The flame-retardant inactive member may further include, for example, at least one selected from paper, an insulating polymer, an ion-conducting polymer, an insulating inorganic material, an oxide-based solid electrolyte, and a sulfide-based solid electrolyte. The insulating polymer may be an olefinic polymer such as polypropylene (PP) or polyethylene (PE).

The density of the substrate or stiffener included in the flame-retardant inactive member may be, for example, 10% to 300%, 10% to 150%, 10% to 140%, 10% to 130%, or 10% to 120% of the density of the cathode active material included in the lithium host layer 22.

The inactive member 40 is a member that does not include a material having electrochemical activity, for example, an electrode active material. The electrode active material is a material that absorbs/desorbs lithium. The inactive member 40 is a member made of a material other than an electrode active material and used in the relevant technical field.

### [Anode layer]

### [First anode active material layer: Anode active material]

Referring to FIGS. 1 to 10, the anode 20 includes a first anode active material layer 22. The first anode active material layer 22 includes, for example, an anode active material and a binder.

The anode active material included in the first anode active material layer 22 is, for example, an anode material capable of forming an alloy or compound with lithium.

The anode active material included in the first anode active material layer 22 has, for example, a particle shape. The average particle size of the anode active material having a particle shape is, for example, 4 µm or less, 3 µm or less, 2 µm or less, 1 µm or less, 500 nm or less, 300 nm or less, or 100 nm or less. The average particle size of the anode active material having a particle shape is, for example, 10 nm to 4 µm, 10 nm to 3 µm, 10 nm to 2 µm, 10 nm to 1 µm, 10 nm to 500 nm, 10 nm to 300 nm or 10 nm to 100 nm. Since the anode active material has an average particle size in this range, reversible absorption and/or desorption of lithium can be facilitated during charging and discharging. The average particle size of the anode active material is, for example, a median diameter (D50) measured using a laser particle size distribution meter.

The anode active material included in the first anode active material layer 22 includes, for example, at least one selected from a carbon-based anode active material and a metal or metalloid anode active material.

The carbon-based anode active material includes, for example, amorphous carbon, crystalline carbon, porous carbon, or a combination thereof.

The carbon-based anode active material is, particularly, amorphous carbon. The amorphous carbon may be, but is not limited to, carbon black (CB), acetylene black (AB), furnace black (FB), ketjen black (KB), and graphene, and any material classified as amorphous carbon in the relevant technical field may be used. The amorphous carbon is carbon that has no crystallinity or very low crystallinity and is distinguished from crystalline carbon or graphitic carbon.

The carbon-based anode active material may be, for example, porous carbon. The pore volume of pores included in the porous carbon is, for example, 0.1 cc/g to 10.0 cc/g, 0.5 cc/g to 5 cc/g, or 0.1 cc/g to 1 cc/g. The average pore diameter of pores included in the porous carbon is, for example, 1 nm to 50 nm, 1 nm to 30 nm, or 1 nm to 10 nm. The BET specific surface area of the porous carbon is, for example, 100 m2/g to 3000 m2/g.

The metal or metalloid anode active material includes, but is not necessarily limited to, at least one selected from the group consisting of gold (Au), platinum (Pt), palladium (Pd), silicon (Si), silver (Ag), aluminum (Al), bismuth (Bi), tin (Sn), and zinc (Zn), and any metal or metalloid anode active material that forms an alloy or compound with lithium in the relevant technical field may be used. For example, nickel (Ni) does not form an alloy with lithium and is therefore not a metal anode active material.

The first anode active material layer 22 includes a type of anode active material among these anode active materials or a mixture of a plurality of different anode active materials. For example, the first anode active material layer 22 includes only amorphous carbon, or includes at least one selected from the group consisting of gold (Au), platinum (Pt), palladium (Pd), silicon (Si), silver (Ag), aluminum (Al), bismuth (Bi), tin (Sn), and zinc (Zn). Alternatively, the first anode active material layer 22 includes a mixture of amorphous carbon and at least one selected from the group consisting of gold (Au), platinum (Pt), palladium (Pd), silicon (Si), silver (Ag), aluminum (Al), bismuth (Bi), tin (Sn), and zinc (Zn). The mixing ratio of the mixture of amorphous carbon and gold, etc., is, for example, 99:1 to 1:99, 10:1 to 1:2, 5:1 to 1:1, or 4:1 to 2:1 by weight ratio, but is not necessarily limited to this range and is selected according to the characteristics of the required all-solid-state secondary battery 1. Since the anode active material has this composition, the cycle characteristics of the all-solid-state secondary battery 1 are further improved.

The anode active material included in the first anode active material layer 22 includes, for example, a mixture of first particles made of amorphous carbon and second particles made of a metal or metalloid. The metal or metalloid includes, for example, gold (Au), platinum (Pt), palladium (Pd), silicon (Si), silver (Ag), aluminum (Al), bismuth (Bi), tin (Sn), and zinc (Zn). The metalloid, alternatively, is a semiconductor. The content of the second particles is 1 to 99 wt%, 1 to 60 wt%, 8 to 60 wt%, 10 to 50 wt%, 15 to 40 wt%, or 20 to 30 wt% based on the total weight of the mixture. Since the second particles have a content in this range, the cycle characteristics of the all-solid-state secondary battery 1 are further improved.

Alternatively, the first anode active material layer 22 includes a composite anode active material. The composite anode active material may include, for example, a carbon-based support and a metal-based anode active material supported on the carbon-based support. Since the composite anode active material has this structure, the localization of the metal-based anode active material in the first anode active material layer can be prevented, and a uniform distribution can be obtained. As a result, the cycle characteristics of the all-solid-state secondary battery 1 including the first anode active material layer 22 are further improved.

The metal-based anode active material supported on the carbon-based support includes, for example, a metal, a metal oxide, a composite of a metal and a metal oxide, or a combination thereof. The metal includes, for example, gold (Au), platinum (Pt), palladium (Pd), silicon (Si), silver (Ag), aluminum (Al), bismuth (Bi), tin (Sn), tellurium (Te), and zinc (Zn). The metal oxide includes, for example, gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, and zinc (Zn) oxide. The metal oxide may include, for example, AuₓO_{y} (0<x≤2, 0<y≤3), PtₓO_{y} (0<x≤1, 0<y≤2), PdₓO_{y} (0<x≤1, 0<y≤1), SiₓO_{y} (0<x≤1, 0<y≤2), AgₓO_{y} (0<x≤2, 0<y≤1), AlₓO_{y} (0<x≤2, 0<y≤3), BiₓO_{y} (0<x≤2, 0<y≤3), SnₓO_{y} (0<x≤1, 0<y≤2), TeₓO_{y} (0<x≤1, 0<y≤3), ZnₓO_{y} (0<x≤1, 0<y≤1), or a combination thereof. The composite of the metal and the metal oxide may include, for example, a composite of Au and AuₓO_{y} (0<x≤2, 0<y≤3), a composite of Pt and PtₓO_{y} (0<x≤1, 0<y≤2), a composite of Pd and PdₓO_{y} (0<x≤1, 0<y≤1), a composite of Si and SiₓO_{y} (0<x≤1, 0<y≤2), a composite of Ag and AgₓO_{y} (0<x≤2, 0<y≤1), a composite of Al and AlₓO_{y} (0<x≤2, 0<y≤3), a composite of Bi and BiₓO_{y} (0<x≤2, 0<y≤3), a composite of Sn and SnₓO_{y} (0<x≤1, 0<y≤2), a composite of Te and TeₓO_{y} (0<x≤1, 0<y≤3), a composite of Zn and ZnₓO_{y} (0<x≤1, 0<y≤1), or a combination of thereof.

The carbon-based support is, for example, amorphous carbon. The amorphous carbon may be, but is not limited to, carbon black (CB), acetylene black (AB), furnace black (FB), ketjen black (KB), graphene, activated carbon, carbon nanofibers (CNF), and carbon nanotubes (CNT), and any material classified as amorphous carbon in the relevant technical field may be used. The amorphous carbon is carbon that has no crystallinity or very low crystallinity and is distinguished from crystalline carbon or graphitic carbon. Carbonaceous materials are, for example, carbon-based anode active materials.

The composite anode active material has, for example, a particle shape. The particle size of the composite anode active material having a particle shape is, for example, 10 nm to 4 µm, 10 nm to 1 µm, 10 nm to 500 nm, 10 nm to 200 nm, or 10 nm to 100 nm. Since the composite anode active material has a particle size in this range, reversible absorption and/or desorption of lithium can be facilitated during charging and discharging. The metal-based anode active material supported on the support may have, for example, a particle shape. The particle size of the metal-based anode active material may be, for example, 1 nm to 200 nm, 1 nm to 150 nm, 5 nm to 100 nm, or 10 nm to 50 nm. The carbon-based support may, for example, have a particle shape. The particle size of the carbon-based support may be, for example, 10 nm to 2 µm, 10 nm to 1 µm, 10 nm to 500 nm, 10 nm to 200 nm or 10 nm to 100 nm. Since the carbon-based support has a particle size in this range, it can be more uniformly disposed within the first anode active material layer. The carbon-based support may be, for example, a nanoparticle having a particle size of 500 nm or less. The particle size of the composite anode active material, the particle size of the metal-based anode active material, and the particle size of the carbon-based support are, for example, average particle sizes. The average particle size is, for example, a median diameter (D50) measured using a laser particle size distribution meter. Alternatively, the average particle size may be determined automatically using software from electron microscope images, or may be determined manually by hand.

### [First anode active material layer: Binder]

The first anode active material layer 22 includes a binder. The binder may be, but is not necessarily limited to, for example, styrene-butadiene rubber (SBR), polytetrafluoroethylene, polyvinylidene fluoride, polyethylene, vinylidene fluoride/hexafluoropropylene copolymer, polyacrylonitrile, or polymethyl methacrylate, and any binder used in the relevant technical field may be used. The binder may consist of a single binder or a plurality of different binders.

Since the first anode active material layer 22 includes the binder, the first anode active material layer 22 is stabilized on the anode current collector 21. In addition, cracks of the first anode active material layer 22 are suppressed despite changes in the volume and/or relative position of the first anode active material layer 22 during a charging and discharging process. For example, when the first anode active material layer 22 does not include the binder, it is possible for the first anode active material layer 22 to be easily separated from the anode current collector 21. As the first anode active material layer 22 is detached from the anode current collector 21, the possibility of a short circuit occurring increases when the anode current collector 21 comes into contact with the electrolyte layer 30 at the exposed portion of the anode current collector 21. The first anode active material layer 22 is prepared by, for example, applying a slurry, in which materials constituting the first anode active material layer 22 are dispersed, onto the anode current collector 21 and drying the applied slurry. Stable dispersion of the anode active material in the slurry is possible by including a binder in the first anode active material layer 22. For example, when applying the slurry onto the anode current collector 21 by screen printing, it is possible to suppress the clogging of a screen (e.g., clogging of the anode active material by aggregates).

### [First anode active material layer: Other additives]

The first anode active material layer 22 may further include additives used in a conventional all-solid-state secondary batteries 1, such as a filler, a coating agent, a dispersant, and an ion conductive aid.

### [First anode active material layer: Solid electrolyte]

The first anode active material layer 22 may further include a solid electrolyte. The solid electrolyte may be, for example, a material selected from the solid electrolytes included in the solid electrolyte layer 30. The solid electrolyte included in the first anode active material layer 22 may act as a reaction point where the formation of lithium metal begins in the first anode active material layer 22, a space where the formed lithium metal is stored, or a path for transferring lithium ions. The solid electrolyte may be omitted.

In the first anode active material layer 22, the content of the solid electrolyte may be high in a region adjacent to the electrolyte layer 30 and may be low in a region adjacent to the anode current collector 21. In the first anode active material layer 22, the solid electrolyte may have a concentration gradient in which the concentration of the solid electrolyte decreases from a region adjacent to the electrolyte layer 30 to a region adjacent to the anode current collector 21.

### [First anode active material layer: Charge capacity]

The ratio (B/A) of the initial charge capacity (B) of the first anode active material layer 22 to the initial charge capacity (A) of the cathode active material layer is, for example, 0.005 to 0.45. The initial charge capacity of the anode active material layer 12 is determined at a maximum charge voltage for Li/Li+ from a 1st open circuit voltage. The initial charge capacity of the first anode active material layer 22 is determined at a voltage of 0.01 V for Li/Li+ from a 2nd open circuit voltage.

The maximum charge voltage is determined by the type of a cathode active material. The maximum charge voltage may be, for example, 1.5 V, 2.0 V, 2.5 V, 3.0 V, 3.5 V, 4.0 V, 4.2 V, or 4.3 V. For example, the maximum charge voltage of Li₂S or a Li₂S composite may be 2.5 V for Li/Li+. For example, the maximum charge voltage of Li₂S or a Li₂S composite may be 3.0 V for Li/Li+. The ratio (B/A) of the initial charge capacity (B) of the first anode active material layer 22 to the initial charge capacity (A) of the cathode active material layer is, for example, 0.01 to 0.3, 0.01 to 0.2, or 0.05 to 0.1. The initial charge capacity (mAh) of the cathode active material layer 12 is obtained by multiplying the charge capacity density (charge specific capacity) (mAh/g) of the cathode active material by the mass (g) of the cathode active material in the cathode active material layer 12. When several types of cathode active materials are used, values of charge capacity density x mass is calculated for all cathode active materials, and the sum of these values is an initial charge capacity of the cathode active material layer 12. The initial charge capacity of the first anode active material layer 22 is also calculated in the same way. The initial charge capacity of the first anode active material layer 22 is obtained by multiplying the charge capacity density (mAh/g) of the anode active material by the mass of the anode active material in the first anode active material layer 22. When several types of anode active materials are used, values of charge capacity density x mass is calculated for all anode active materials, and the sum of these values is an initial charge capacity of the anode active material layer 22. The charge capacity density of each of the cathode active materials and anode active materials may be measured by using an all-solid-state half-cell using lithium metal as a counter electrode.

The initial charge capacity of each of the cathode active material layer 12 and the first anode active material layer 22 may be directly measured using an all-solid-state half-cell at a constant current density of, for example, 0.1 mA/cm2. For the cathode, the measurements may be performed for an operating voltage from the first open circuit voltage (OCV) to the maximum charge voltage, for example, 3.0 V (vs. Li/Li+). For the anode, the measurements may be performed for an operating voltage from the second open circuit voltage (OCV) to a voltage of 0.01 V for the anode, for example, lithium metal. For example, the all-solid-state half-cell having the cathode active material layer may be charged from the first open circuit voltage to 3.0 V with a constant current of 0.1 mA/cm2, and the all-solid-state half-cell having the first anode active material layer may be charged from the second open circuit voltage to 0.01 V with a constant current of 0.1 mA/cm2. The current density during constant current charging may be, for example, 0.2 mA/cm2 or 0.5 mA/cm2. The all-solid-state half-cell having the cathode active material layer may be charged from the first open circuit voltage to 2.5 V, 2.0 V, 2.5 V, 2.8 V, 3.0 V, 3.5 V, or 4.0 V. The maximum charge voltage of the cathode active material layer may be determined by the maximum voltage of the battery satisfying the safety conditions according to JISC8712:2015 of the Japanese Standards Association.

When the initial charge capacity of the first anode active material layer 22 is too small, the thickness of the first anode active material layer 22 becomes very thin, so that lithium dendrites formed between the first anode active material layer 22 and the anode current collector 21 during repeated charging and discharging processes collapse the first anode active material layer 22, thus making it difficult to improve the cycle characteristics of the all-solid-state secondary battery 1. When the charge capacity of the first anode active material layer 22 increases excessively, the energy density of the all-solid-state secondary battery 1 decreases and the internal resistance of the all-solid-state secondary battery 1 due to the first anode active material layer 22 increases, thus making it difficult to improve the cycle characteristics of the all-solid-state secondary battery 1.

The thickness of the first anode active material layer 22 is, for example, 50% or less, 40% or less, 30% or less, 20% or less, 10% or less, or 5% or less of the thickness of the cathode active material layer 12. The thickness of the first anode active material layer 22 is, for example, 1 to 50 %, 1 to 40 %, 1 to 30 %, 1 to 20 %, 1 to 10 %, or 1 to 5 % of the thickness of the cathode active material layer 12. The thickness of the first anode active material layer 22 is, for example, 1 µm to 20 µm, 2 µm to 15 µm, or 3 µm to 10 µm. When the thickness of the first anode active material layer 22 is too thin, lithium dendrites formed between the first anode active material layer 22 and the anode current collector 21 collapse the first anode active material layer 22, thus making it difficult to improve the cycle characteristics of the all-solid-state secondary battery 1. When the thickness of the first anode active material layer 22 increases excessively, the energy density of the all-solid-state secondary battery 1 decreases and the internal resistance of the all-solid-state secondary battery 1 due to the first anode active material layer 22 increases, thus making it difficult to improve the cycle characteristics of the all-solid-state secondary battery 1. When the thickness of the first anode active material layer 22 decreases, for example, the initial charge capacity of the first anode active material layer 22 also decreases.

### [Second anode active material layer]

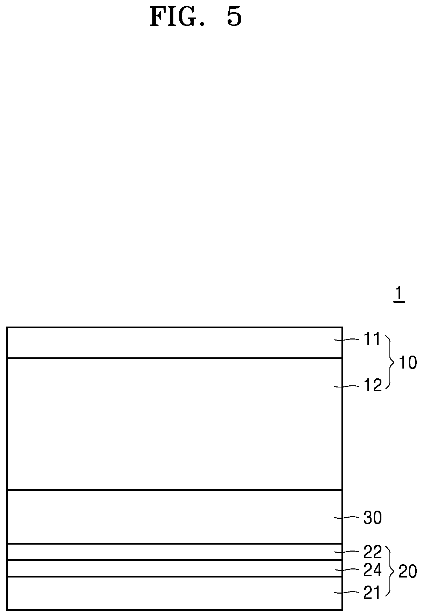

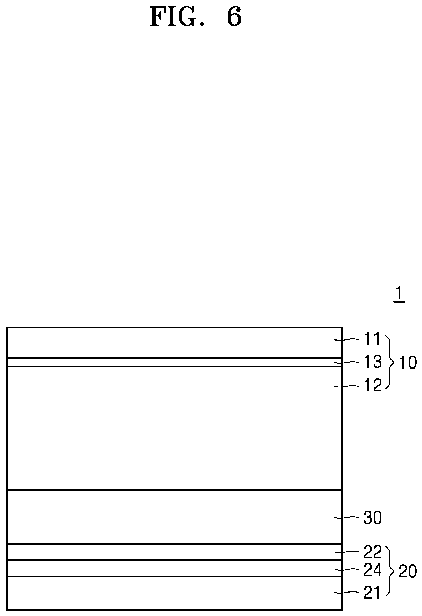

Referring to FIGS.5 and 6, the all-solid-state secondary battery 1 further includes, for example, a second anode active material layer 24 disposed between the anode current collector 21 and the first anode active material layer 22, after being charged. The second anode active material layer 24 is a metal layer including lithium or a lithium alloy. The metal layer includes lithium or a lithium alloy. Therefore, the second anode active material layer is a metal layer including lithium and thus acts as a lithium reservoir. The lithium alloy may be, but is not limited to, a Li-Al alloy, a Li-Sn alloy, a Li-In alloy, a Li-Ag alloy, a Li-Au alloy, a Li-Zn alloy, a Li-Ge alloy, or a Li-Si alloy, and any lithium alloy used in the relevant technical field may be used. The second anode active material layer 24 may be composed of one of these alloys or of lithium, or may be composed of several types of alloys. The second anode active material layer 24 is, for example, a plated layer. The second anode active material layer 24 is deposited between the first anode active material layer 22 and the anode current collector 21 during the charging process of the all-solid-state secondary battery 1.

The thickness of the second negative electrode active material layer 24 is, but is not particularly limited, for example, 1 µm to 500 µm, 1 µm to 200 µm, 1 µm to 150 µm, 1 µm to 100 µm, or 1 µm to 50 µm. When the thickness of the second anode active material layer 24 is too thin, it is difficult for the second anode active material layer 24 to act as a lithium reservoir. When the thickness of the second anode active material layer 24 is too thick, the mass and volume of the all-solid-state secondary battery 1 may increase, and the cycle characteristics of the all-solid-state secondary battery 1 may rather deteriorate.

Alternatively, in the all-solid-state secondary battery 1, the second anode active material layer 24 may be disposed between the anode current collector 21 and the first anode active material layer 22 before assembling the all-solid-state secondary battery 1. When the second anode active material layer 24 is disposed between the anode current collector 21 and the first anode active material layer 22 before assembling the all-solid-state secondary battery 1, the second anode active material layer 24 acts as a lithium reservoir because it is a metal layer including lithium. For example, lithium foil may be disposed between the anode current collector 21 and the first anode active material layer 22 before assembling the all-solid-state secondary battery 1.

When the second anode active material layer 24 is deposited by charging after assembling the all-solid-state secondary battery 1, the energy density of the all-solid-state secondary battery 1 increases because the second anode active material layer 24 is not included during the assembling of the all-solid-state secondary battery 1. When charging the all-solid-state secondary battery 1, the charging is performed in excess of the charge capacity of the first anode active material layer 22. That is, the first anode active material layer 22 is overcharged. During the initial stage of charging, lithium is absorbed into the first anode active material layer 22. The anode active material included in the first cathode active material layer 22 forms an alloy or compound with the lithium ions that have moved from the cathode layer 10. When charging exceeds the capacity of the first anode active material layer 22, for example, lithium is deposited on the back surface of the first anode active material layer 22, that is, between the anode current collector 21 and the first anode active material layer 22, and a metal layer corresponding to the second anode active material layer 24 is formed by the deposited lithium. The second anode active material layer 24 is a metal layer mainly including lithium (i.e., metal lithium). These results are obtained because the anode active material included in the first anode active material layer 22 includes a material that forms an alloy or compound with lithium. During discharging, lithium in the first anode active material layer 22 and the second anode active material layer 24, that is, the metal layer, is ionized and moves toward the cathode layer 10. Therefore, it is possible to use lithium as an anode active material in the all-solid-state secondary battery 1. In addition, since the first anode active material layer 22 covers the second anode active material layer 24, it acts as a protective layer for the second anode active material layer 24, that is, the metal layer, and at the same time, serves to suppress the deposition and growth of lithium dendrites. Therefore, the short circuit and capacity reduction of the all-solid-state secondary battery 1 are suppressed, and as a result, the cycle characteristics of the all-solid-state secondary battery 1 are improved. In addition, when the second anode active material layer 24 is disposed by charging after assembling the all-solid-state secondary battery 1, the anode layer 20, that is, the anode current collector 21 and the first anode active material layer 22, and the region therebetween, are Li-free regions that do not include lithium (Li) in the initial state of the all-solid-state secondary battery 1 or in the state after complete discharging.

### [Anode current collector]

The anode layer 20 includes an anode current collector 21. The anode current collector 21 is composed of, for example, a material that does not react with lithium, that is, does not form both an alloy and a compound. Examples of the material constituting the anode collector 21 include, but are not necessarily limited to, copper (Cu), stainless steel, titanium (Ti), iron (Fe), cobalt (Co), and nickel (Ni), and any material that can be used as an electrode collector in the relevant technical field may be used. The anode current collector 21 may be composed of one of the above-described metals, or may be composed of an alloy or coating material of two or more of the above-described metals. The anode collector 21 has, for example, a shape of a plate or a foil.

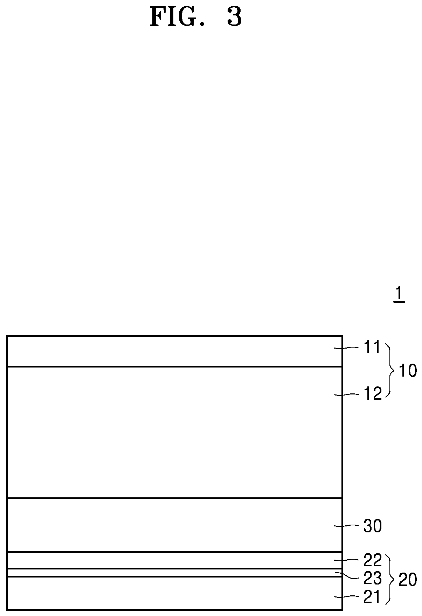

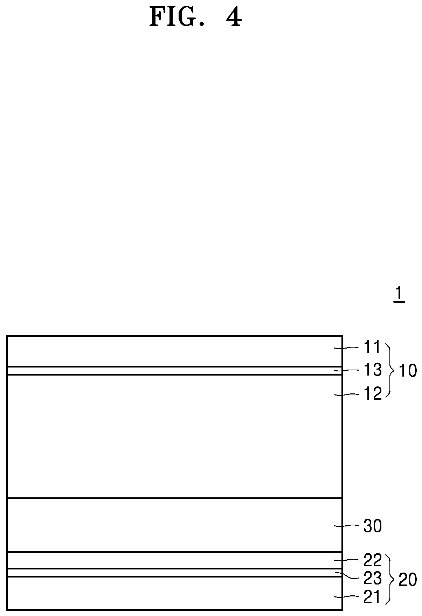

Referring to FIGS. 3 and 4, the all-solid-state secondary battery 1 may further include, for example, a thin film 23 including an element capable of forming an alloy with lithium on one surface of the anode current collector 21. The thin film 23 is disposed between the anode current collector 21 and the first anode active material layer 22. The thin film 23 includes, for example, an element capable of forming an alloy with lithium. The element capable of forming an alloy with lithium may be, but is not necessarily limited to, gold, silver, zinc, tin, indium, silicon, aluminum, or bismuth, and any element capable of forming an alloy with lithium in the relevant technical field may be used. The thin film 23 may be composed of one of these metals or may composed of an alloy of several types of metals. Since the thin film 23 is disposed on one surface of the anode current collector 21, for example, the deposition shape of the second anode active material layer 24 deposited between the thin film 23 and the first anode active material layer 22 becomes flatter, and thus the cycle characteristics of the all-solid-state secondary battery 1 can be further improved.

The thickness of the thin film 23 is, for example, 1 nm to 800 nm, 10 nm to 700 nm, 50 nm to 600 nm, or 100 nm to 500 nm. When the thickness of the thin film 23 is less than 1 nm, it may be difficult for the thin film 23 to perform its function. When the thickness of the thin film 23 is too thick, the thin film 23 itself absorbs lithium, so that the deposition amount of lithium in the anode may be reduced, the energy density of the all-solid-state battery may be reduced, and the cycle characteristics of the all-solid-state secondary battery 1 may be deteriorated. The thin film 23 may be formed on the anode current collector 21 by, for example, a vacuum deposition method, a sputtering method, a plating method, or the like, but the disclosure is not necessarily limited to these methods, and any method capable of forming the thin film 23 in the relevant technical field is possible.

Although not shown in the drawings, the anode current collector 21 may include, for example, a base film and a metal layer disposed on one or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. Since the base film includes an insulating thermoplastic polymer, when a short circuit occurs, the base film softens or liquefies, thereby blocking battery operation and suppressing a rapid increase in current. The metal layer may include, for example, copper (Cu), stainless steel, titanium (Ti), iron (Fe), cobalt (Co), nickel (Ni), or an alloy thereof. The anode current collector 21 may additionally include a metal chip and/or a lead tab. For more specific details on the base film, metal layer, metal chip, and lead tab of the anode current collector 21, refer to the above-described cathode current collector 11. Since the anode current collector 21 has this structure, the weight of the anode may be reduced, and as a result, the energy density of the anode and the lithium battery may be improved.

### [Solid electrolyte layer]

### [Solid electrolyte layer: Solid electrolyte]

Referring to FIGS. 1 to 10, the all-solid-state secondary battery 1 includes a solid electrolyte layer 30 disposed between the cathode layer 10 and the anode layer 20. The solid electrolyte layer 30 includes, for example, a solid electrolyte, or a combination of a solid electrolyte and a gel electrolyte.

The solid electrolyte may include, for example, a sulfide-based solid electrolyte, an oxide-based solid electrolyte, a polymer solid electrolyte, or a combination thereof.

The solid electrolyte is, for example, a sulfide-based solid electrolyte. For more specific details regarding the sulfide-based solid electrolyte, refer to the above-described cathode active material layer 12. The sulfide-based solid electrolyte of the solid electrolyte layer 20 may be selected from the sulfide-based solid electrolytes used in the above-described cathode active material layer 12.

The oxide-based solid electrolyte may be, for example, Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y}Ti_{y}O₃(PLZT)(0≤x<1, 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃(0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂(0≤x≤1 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂(M = Te, Nb, or Zr, 0≤x≤10), or a combination thereof. The oxide-based solid electrolyte is prepared, for example, by a sintering method or the like.

The oxide-based solid electrolyte is, for example, a garnet-type solid electrolyte selected from Li₇La₃Zr₂O₁₂ (LLZO) and Li₃₊ₓLa₃Zr₂₋ₐMₐO₁₂ (M doped LLZO, M=Ga, W, Nb, Ta, or Al, 0<a<2, 0≤x≤10).

The polymer solid electrolyte is an electrolyte that includes a mixture of a lithium salt and a polymer or includes a polymer having an ion-conducting functional group. The polymer solid electrolyte may be, for example, a polymer electrolyte that is in a solid state at 25°C and 1 atm. The polymer solid electrolyte may not include liquid. The polymer solid electrolyte includes a polymer, and the polymer may be, but is not limited to, for example, polyethylene oxide (PEO), polyvinylidene fluoride (PVDF), vinylidene fluoride-hexafluoropropylene (PVDF-HFP), polyethylene oxide (PEO), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), polymethyl methacrylate (PMMA), poly(methylmethacrylate), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (PAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylatlacene-2-sulfonate 9,10-diphenylanthracene-2-sulfonate (DPASLi+), or a combination thereof, and any material that is used as a plolymer electrolyte in the relevant technical field may be used. Any lithium salt that can be used as a lithium salt in the relevant technical field may be used. The lithium salt is, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (x and y are each 1 to 20), LiCl, LiI, or a mixture thereof. The polymer included in the polymer solid electrolyte may be, for example, a compound including 10 or more, 20 or more, 50 or more, or 100 or more repeating units. The weight average molecular weight of the polymer included in the polymer solid electrolyte may be, for example, 1000 Dalton or more, 10,000 Dalton or more, 100,000 Dalton or more, or 1,000,000 Dalton or more.

The gel electrolyte is, for example, a gel polymer electrolyte. The gel electrolyte may have a gel state without including a polymer.

The gel polymer electrolyte may include a liquid electrolyte and a polymer or may include an organic solvent and a polymer having an ion-conducting functional group. The polymer gel electrolyte may be, for example, a polymer electrolyte that is in a gel state at 25°C and 1 atm. The polymer gel electrolyte may have a gel state without including liquid. The liquid electrolyte used in the polymer gel electrolyte may be, for example, an ionic liquid, a mixture of a lithium salt and an organic solvent, a mixture of an ionic liquid and an organic solvent, or a mixture of a lithium salt, an ionic liquid, and an organic solvent. The polymer used in the polymer gel electrolyte may be selected from the polymers used in the solid polymer electrolyte. The organic solvent may be selected from the organic solvents used in the liquid electrolyte. The organic solvent is, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof. The lithium salt may be selected from the lithium salts used in the solid polymer electrolyte. The ionic liquid is a salt that is liquid at room temperature or molten at room temperature and is composed only of ions and has a melting point of room temperature or lower. The ionic liquid may include at least one selected from compounds including, for example, a) at least one cation selected from ammonium, pyrrolidinium, pyridinium, pyrimidinium, imidazolium, piperidinium, pyrazolium, oxazolium, pyridazinium, phosphonium, sulfonium, triazolium, and mixtures thereof, and b) at least one anion selected from BF₄-, PF₆-, AsF₆-, SbF₆-, AlCl₄-, HSO₄-, ClO₄-, CH₃SO₃-, CF3CO2-, Cl-, Br-, I-, BF₄-, SO₄-, CF₃SO₃-, (FSO₂)₂N-, (C₂F₅SO₂)₂N-, (C₂F₅SO₂)(CF₃SO₂)N-, and (CF₃SO₂)₂N-. The polymer solid electrolyte may be impregnated into an electrolyte solution in a lithium battery to form a gel polymer electrolyte. The polymer gel electrolyte may further include inorganic particles. The polymer included in the polymer gel electrolyte may be, for example, a compound including 10 or more, 20 or more, 50 or more, or 100 or more repeating units. The weight average molecular weight of the polymer included in the polymer gel electrolyte may be, for example, 500 Dalton or more, 1000 Dalton or more, 10,000 Dalton or more, 100,000 Dalton or more, or 1,000,000 Dalton or more.

### [Solid electrolyte layer: Binder]

The solid electrolyte layer 30 may include, for example, a binder. The binder included in the solid electrolyte layer 30 may be, but is not limited to, styrene butadiene rubber (SBR), polytetrafluoroethylene, polyvinylidene fluoride, or polyethylene, and any binder used in the relevant technical field may be used. The binder of the solid electrolyte layer 30 may be the same as or different from the binder included in the cathode active material layer 12 and the anode active material layer 22. The binder may be omitted.

The content of the binder included in the soid electrolyte layer 30 is 0.1 to 10 wt%, 0.1 to 5 wt%, 0.1 to 3 wt%, 0.1 to 1 wt%, 0 to 0.5 wt%, or 0 to 0.1 wt% with respect to the total weight of the solid electrolyte layer 30.

### [All-solid-state secondary battery]

Referring to FIGS. 1 to 10, an all-solid-state secondary battery 1 includes a cathode layer 10; an anode layer 20; and a solid electrolyte layer 30 between the cathode layer 10 and the anode layer 20. The cathode layer 10 includes a cathode current collector 11 and a cathode active material layer 12 on one side or both sides of the cathode current collector 11. The cathode active material layer 12 includes a lithium sulfide-based cathode active material and an inorganic filler, wherein the inorganic filler includes a lithium metal oxyhalide represented by Formula 1 below.

<Formula 1> LiₐAl_{b}M_{c}O_{d}Clₑ

in Formula 1, 0<a≤3, 0<b≤3, 0≤c<2, 0<d≤4, 0<e≤4, d<e, and
M is a metal selected from Groups 3 to 15 of Periodic Table of Elements. The anode layer 20 includes anode current collector 21 and a first anode active material layer 22 on one side of the anode current collector 21.

### [Method of manufacturing all-solid-state secondary battery]

An all-solid-state secondary battery according to an embodiment may be manufactured by a method including the processes: providing a cathode layer; providing an anode layer; and disposing of a solid electrolyte layer between the cathode layer and the anode layer, wherein the cathode layer is manufactured by: preparing a cathode mixture, which is a cathode active material layer composition, by mixing a lithium sulfide-based cathode active material with at least one selected from an inorganic filler, a binder, and a conductive material; and providing the mixture onto a cathode current collector. The process of manufacturing a cathode using the cathode mixture may be performed according to a dry process, and may also be performed according to a wet process.

A first solid electrolyte maybe further added to the cathode mixture. The first solid electrolyte is, for example, a sulfide-based solid electrolyte. In addition, a lithium salt may be further added to the cathode mixture.

In the process of manufacturing the cathode, heat treatment may be performed. The heat treatment may be performed at 50 to 200°C, 100 to 180°C, or 110 to 150°C. When undergoing this heat treatment, voids in the cathode can be removed.

After the process of disposing an electrolyte between the cathode and the anode, a process of obtaining a battery assembly and pressing the battery assembly may be performed.

The pressing may be, but is not limited to, a roll press, a flat press, or the like, and any pressing used in the relevant technical field is possible. The pressing process may be omitted.

The pressing is performed at a temperature ranging from room temperature (20 °C to 25 °C) to 90 °C. Alternatively, the pressing is performed at a high temperature of 100 °C or higher. The pressing time is, for example, 30 minutes or less, 20 minutes or less, 15 minutes or less, or 10 minutes or less. The pressing time is 1 ms to 30 minutes, 1 ms to 20 minutes, 1 ms to 15 minutes, or 1 ms to 10 minutes. The pressing method may be, but is not limited to, isotactic pressing, roll pressing, flat pressing, or the like, and any pressing method used in the relevant technical field is possible. The pressure applied during pressing is, for example, 500 MPa or less, for example, 400 MPa or less, 300 MPa or less, 200 MPa or less, 100 MPa or less, or 50 MPa. The pressure applied during pressing is, for example, 1 to 50 MPa, 1 to 30 MPa, 1 MPa to 20 MPa, or 1 to 10 MPa. Solid electrolyte powder is sintered by this pressing to form a single solid electrolyte

In the pressing process, for example, a plating pressing treatment is performed by a pressure of 500 MPa at 40 to 100 °C, for example, 85 °C for 30 min. The solid electrolyte layer is sintered by this pressing treatment, thereby improving battery characteristics.

According to another embodiment, the above-described pressing process may be omitted.

The lithium sulfide-based cathode active material is Li₂S, a Li₂S composite, or a combination thereof.

The Li₂S composite provides a composite of Li₂S and a lithium salt, or a composite of Li₂S, a lithium salt, and a carbon-based material. The composite of Li₂S and a lithium salt may be prepared, for example, by mechanically milling Li₂S and a lithium salt. The milling conditions are not particularly limited, and any conditions capable of forming a composite of Li₂S and a lithium salt are possible. Li₂S particles and a lithium salt may be put into a ball mill and stirred at a speed of 100 to 1000 rpm for 1 to 20 hours to prepare a composite of Li₂S and a lithium salt The stirring may be performed one or more times.

As the lithium salt, for example, LiI, LiBr, LiCl, LiF, LiH, Li₂O, Li₂Se, Li₂Te, Li₃N, Li₃P, Li₃As, Li₃Sb, Li₃Al₂, LiB₃, Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof may be used.

The composite of Li₂S, a lithium salt, and a carbon-based material may be prepared, for example, by mechanically milling Li₂S and a lithium salt; and adding a carbon-based material to the milled product and milling this product.

When preparing the Li₂S composite, a sulfide-based solid electrolyte may be used. The Li₂S-lithium salt composite is mixed with the sulfide-based solid electrolyte to prepare a mixture. The mixing ratio of the Li₂S composite and the sulfide-based solid electrolyte may be, for example, 50:50 to 95:5, 50:50 to 90:10, 50:50 to 80:20, or 50:50 to 70:30 by weight.

The mixture may additionally include a process solvent. The mixture may have a slurry form by additionally including a process solvent. The solvent may be, for example, octyl acetate, but is not limited thereto; and any solvent used in the relevant technical field is possible. Alternatively, the mixture may be prepared by a dry process without containing a process solvent.

Mechanical milling may be used during the milling process. Ball mills, etc., may be used during mechanical milling.

According to another embodiment, the above-described pressing treatment process may be omitted.

Hereinafter, the present inventive concept will be described in more detail through examples and comparative examples. However, these examples are intended to illustrate the present inventive concept, and the scope of the present inventive concept is not limited to these examples.

### (Preparation of composites of Li₂S and lithium salt)

### Preparation Example 1: Li₂-LiI composite

Li₂S and LiI were mixed at a weight ratio of 30:20. The mixture was mechanically milled using a ball mill to prepare a Li₂S-LiI composite. Milling conditions were 25 °C, 600 rpm for 10 hours.

The size of the Li₂S-LiI composite was less than 1 µm. The size of the Li₂S-LiI composite was calculated by software from scanning electron microscope images for L₂S-LiI composite powder. The size of the Li₂S-LiI composite is an average particle size D50.

The Mohs hardness of Li₂S was 0.6, and the Mohs hardness of LiI was 2.0. The Mohs hardness of the Li₂S-LiI composite was less than 2.

### Comparative Preparation Example 1: Simple mixture of Li₂S and LiI

A mixture of Li₂S and LiI in a weight ratio of 30:20 was directly used.

### (Preparation of Li₂S-LiI-CNF cathode active material)

### Preparation Example 2: Li₂S-LiI-CNF

Li₂S and LiI were mixed at a weight ratio of 30:20. The mixture was mechanically milled using a ball mill to prepare a Li₂S-LiI composite. Milling conditions were 25 °C, 510 rpm for 10 hours.

The Li₂S-LiI composite was mixed with carbon nanofiber (CNF) at a weight ratio of 50:10. This mixture was mechanically milled using a ball mill to prepare a Li₂S-LiI-CNF composite. Milling conditions were 25 °C, 510 rpm for 10 hours.

The Li₂S-LiI-CNF composite was used as a composite cathode active material.

### (Preparation of inorganic filler)

### Preparation Example 3: Preparation of LiAlO_{0.75}Cl_{2.5}(LACO75)

First, LiCl and AlCl₃ with a molar ratio of 1:1 were milled and uniformly mixed, then heated to 200°C in a closed reactor and kept warm for 1 hour. Then, the temperature of the reaction product was lowered to room temperature to obtain lithium tetrachloroaluminate (LiAlCl₄). The obtained LiAlCl₄ was uniformly mixed with Sb₂O₃ at a molar ratio of 4:1, heated to 300°C in an argon protective atmosphere, and kept warm for 2 hours. SbCl₃ was volatilized and removed after this reaction due to its low vaporization point (223.5°C) during the reaction, and LACO75 was obtained after cooling. The above entire experimental process is carried out under an inert atmosphere to prevent the reaction raw materials from reacting with air.

The ionic conductivity of the inorganic filler LiAlO_{0.75}Cl_{2.5} (LACO) measured by AC impedance at 25°C and 1 atm was about 1 mS/cm. The amplitude voltage used for the AC impedance was 50 mV, and the frequency range used therefor was 1 MHz to 1 Hz. The inorganic filler LiAlO_{0.75}Cl_{2.5} was amorphous and glassy, having a glass transition temperature. The glass transition temperature of the inorganic filler LiAlO_{0.75}Cl_{2.5} was about -17°C at 25°C and 1 atm. The elastic modulus of the inorganic filler LiAlO_{0.75}Cl_{2.5} was about 1.5 GPa at 30°C. The glass transition temperature and elastic modulus of the inorganic filler LiAlO_{0.75}Cl_{2.5} were measured using a Dynamic Mechanical Analyzer (DMA). The viscoelastic creep rate of the inorganic filler LiAlO_{0.75}Cl_{2.5} was 4×10⁻⁴ %/s. The viscoelastic creep rate was measured using a Universal Test Machine (UTM).

### Preparation Example 4: Preparation of LiAl_{1.3}O_{1.1}Cl_{2.7} (LACO110)

LiAl_{1.3}O_{1.1}Cl_{2.7} (LACO110) was prepared in the same manner as in Preparation Example 1, except that the contents of LiCl, AlCl₃, and Sb₂O₃ were stoichiometrically changed to obtain LiAl_{1.3}O_{1.1}Cl_{2.7.}

### (Manufacturing of cathode and secondary battery)

### Example 1: (Li₂S composite + LACO75 + binder) (60:39:1) cathode // sulfide SE layer // Ag-C anode-free

### (Manufacturing of cathode)

As a cathode active material, the Li₂S-LiI-CNF composite prepared in Preparation Example 2 was prepared. LiAlCl_{2.5}O_{0.75} (LACO75) was prepared. As a binder, PVDF-HFP was prepared. These raw materials were mixed at a weight ratio of cathode active material: inorganic filler LACO: binder = 60: 39: 1 to prepare a cathode mixture. The cathode mixture was obtained by dry mixing using a ball mill. The cathode mixture was disposed on a cathode current collector made of aluminum foil coated with a carbon layer on one side thereof, and was plate-pressed at a temperature of 130°C and a pressure of 10 MPa for 10 minutes to manufacture a cathode. The total thickness of the cathode layer was about 120 µm. The thickness of the cathode active material layer was about 100 µm, the thickness of the aluminum foil coated with a carbon layer was about 20 µm, and the thickness of the carbon layer was about 1 µm.

### (Manufacturing of anode)

As an anode current collector, a SUS foil having a thickness of 10 µm was prepared. As an anode active material, carbon black (CB) having a primary particle size of about 30 nm and silver (Ag) particles having an average particle diameter of about 60 nm were prepared.

4 g of mixed powder, in which carbon black (CB) and silver (Ag) particles were mixed at a weight ratio of 3:1, was put into a container, and 4 g of an NMP solution containing 7 wt% of PVDF binder (#9300 from Kureha Co., Ltd.) was added thereto to prepare a mixed solution. A slurry was prepared by adding NMP dropwise to the prepared mixed solution and stirring the mixed solution. The prepared slurry was applied onto a SUS sheet using a bar coater, dried in air at 80 °C for 10 minutes, and then vacuum-dried at 40 °C for 10 hours to prepare a laminate. The prepared laminate was cold-roll-pressed to flatten the surface thereof to prepare an anode having a first anode active material layer/anode current collector structure. The thickness of the first anode active material layer was about 27 µm.

The ratio (B/A) of the initial charge capacity (B) of the first anode active material layer to the initial charge capacity (A) of the cathode active material layer was less than 1. The initial charge capacity of the cathode active material layer was determined from the first open circuit voltage to a charge of 4.25 V vs. Li/Li+. The initial charge capacity of the first anode active material layer was determined from the second open circuit voltage to a charge of 0.01 V vs. Li/Li+.

### (Manufacturing of solid electrolyte layer)

1.5 parts by weight of an acrylic binder was added to 98.5 parts by weight of a solid electrolyte, Li₆PS₅Cl, which is an argyrodite-type crystal (D₅₀=3.0 µm, crystalline), to prepare a mixture. A slurry was prepared by adding octyl acetate to the prepared mixture and stirring the mixture. The prepared slurry was applied using a bar coater onto a 15 µm thick nonwoven fabric placed on a 75 µm thick PET substrate, and dried in air at 80 °C for 10 minutes to prepare a laminate. The prepared laminate was vacuum-dried at 80 °C for 2 hours to manufacture a solid electrolyte layer.

### (Inactive member: Elastic sheet)

As an elastic sheet, a porous polyurethane foam sheet having a thickness of 50 µm was prepared.

### (Manufacturing of all-solid-state secondary battery)

A solid electrolyte layer was disposed on an anode such that a first anode active material layer contacts the solid electrolyte layer, and a cathode was disposed on the solid electrolyte layer such that a cathode active material layer contacts the solid electrolyte layer, thereby preparing a laminate.

The prepared laminate was plate-pressed by a pressure of 500 MPa at 85 °C for 30 min. By this pressing treatment, the solid electrolyte layer is sintered, thereby improving battery characteristics. The thickness of the sintered solid electrolyte layer was about 30 µm. The density of the Li₆PS₅Cl solid electrolyte, which is an argyrodite-type crystal, included in the sintered solid electrolyte layer, was 1.6 g/cc.

The pressed laminate was disposed in a pouch and sealed in vacuum to manufacture an all-solid-state secondary battery. A portion of the cathode current collector and a portion of the anode current collector were extended outside the sealed battery, and were used as a cathode terminal and an anode terminal.

The all-solid-state secondary battery was disposed between pressing jigs, and pressed with a pressure of 0.5 MPa.

### Example 2: (Li₂S composite + LACO75 + binder) (60:39:1) cathode // LACO SE layer // Ag-C anode-free

An all-solid-state secondary battery was manufactured in the same manner as Example 1, except that a LACO solid electrolyte layer obtained according to the following process was used as the solid electrolyte layer.

As the LACO solid electrolyte layer, a LiAlCl_{2.5}O_{0.75} (LACO75) membrane obtained by rolling the LACO solid electrolyte obtained according to Preparation Example 3 was used.

### Example 3: (Li₂S composite + LACO75) cathode // garnet SE layer // Ag-C anode-free

An all-solid-state secondary battery was manufactured in the same manner as in Example 1, except that a solid electrolyte layer Li₇La₃Zr₂O₁₂, garnet-type oxide, was used as the solid electrolyte layer.

### Example 4: (Li₂S composite + LACO75) cathode // PEO layer // Ag-C anode-free

An all-solid-state secondary battery was manufactured in the same manner as in Example 1, except that a polyethylene oxide (PEO) solid electrolyte layer was used as the solid electrolyte layer.

### Example 5: (Li₂S-composite + LACO75 + solid electrolyte + binder) (60:20:19:1) cathode // sulfide-based SE layer // Ag-C anode-free

### (Manufacturing of cathode)

The Li₂S-LiI-CNF composite prepared in Preparation Example 2 was prepared as a cathode active material. LiAlCl_{2.5}O_{0.75}(LACO75) was prepared, and Li₆PS₅Cl, an argyrodite-type crystal (D50=3.0 µm, crystalline), was prepared as a solid electrolyte. PVDF-HFP was prepared as a conductive material. These materials were mixed at a weight ratio of cathode active material: LACO solid electrolyte (SE): solid electrolyte (Li₆PS₅Cl): binder = 60: 20: 19: 1 to prepare a cathode mixture. The cathode mixture was obtained by dry mixing using a ball mill. The cathode mixture was disposed on a cathode current collector made of aluminum foil coated with a carbon layer on one side thereof, and was plate-pressed at a temperature of 130°C and a pressure of 10 MPa for 10 minutes to manufacture a cathode. The total thickness of the cathode layer was about 120 µm. The thickness of the cathode active material layer was about 100 µm, the thickness of the aluminum foil coated with a carbon layer was about 20 µm, and the thickness of the carbon layer was about 1 µm.

### Example 6: (Li₂S composite + LACO + binder)(60:39:1) cathode // sulfide-based SE layer // Ag-C anode-free

An all-solid-state secondary battery was manufactured in the same manner as in Example 1, except that the LiAl_{1.3}Cl_{2.7}O_{1.1} (LACO85) obtained according to Preparation Example 4 was used instead of LiAlCl_{2.5}O_{0.75} (LACO₇₅) when manufacturing a cathode.

### Comparative Example 1: (Sulfide-based SE + Li₂S composite) cathode // sulfide-based SE // Ag/C anode-free

An all-solid-state secondary battery was manufactured in the same manner as in Example 5, except that a cathode was manufactured according to the following process.

### (Manufacturing of cathode)

The Li₂S-LiI-CNF composite prepared in Preparation Example 2 was prepared as a cathode active material. Li₆PS₅Cl, an argyrodite-type crystal (D50=3.0 µm, crystalline), was prepared as a solid electrolyte. PVDF-HFP was prepared as a binder. These materials were mixed at a weight ratio of cathode active material: solid electrolyte (Li₆PS₅Cl): binder = 60: 39: 1 to prepare a cathode mixture. The cathode mixture was obtained by dry mixing using a ball mill. The cathode mixture was disposed on a cathode current collector made of aluminum foil coated with a carbon layer on one side thereof, and was plate-pressed at a temperature of 130°C and a pressure of 10 MPa for 10 minutes to manufacture a cathode. The total thickness of the cathode layer was about 120 µm. The thickness of the cathode active material layer was about 100 µm, the thickness of the aluminum foil coated with a carbon layer was about 20 µm.

### Comparative Example 2: (Li₂S composite + PEGDMA + binder) (60:39:1) cathode // sulfide-based SE layer // Ag-C anode-free

An all-solid-state secondary battery was manufactured in the same manner as in Example 1, except that polyethylene glycol dimethacrylate (PEGDMA) was used instead of LACO when manufacturing a cathode active material layer, and that a cathode current collector made of aluminum foil without a carbon coating layer was used as a cathode current collector.

### Comparative Example 3: (Li₂S composite + LACO + binder) (60:39:1) anode // sulfide-based SE layer // Ag-C anode-free, no heat treatment during cathode manufacturing

An all-solid-state secondary battery was manufactured in the same manner as in Example 1, except that the cathode mixture was disposed on a cathode current collector made of aluminum foil coated with a carbon layer on one side thereof and a cathode was manufactured without a pressing heat treatment process.

### Evaluation Example 1: XRD analysis and scanning electron microscopy analysis

XRD spectra were measured using Cu Kα radiation for the raw material (bare) Li₂S used in Preparation Example 1, pulverized Li₂S, the Li₂S-LiI composite prepared in the first step of Preparation Example 2, and the Li₂S-LiI-CNF composite prepared in Preparation Example 2. The measurement results are shown in Table 1 below. The Li₂S crystallite size and lattice constant were derived from the first peak for the (111) crystal plane appearing at a diffraction angle of 2θ = 27°± 2.0° in the XRD spectra.

The pulverized Li₂S was prepared by milling under the same conditions, except that in the first step of Example 1, the mixture of Li₂S and LiI with a weight ratio of 30: 20 was changed to 50 parts by weight of Li₂S. The second step was not performed.

For the raw material, the pulverized Li₂S, the Li₂S-LiI composite prepared in the first step, and the Li₂S-LiI-CNF composite, the particle size (i.e., D50 particle diameter) of the composite was measured using a laser particle size analyzer (PSA) and a scanning electron microscope, and the size of Li₂S particles in the composite was measured using a scanning electron microscope. The measurement results are shown in Table 1 below.

**[Table 1]**

| | Second peak position [°] | Li₂S crystallite size [nm] | Li₂S particle size [µm] |
|---|---|---|---|
| bare Li₂S | 27.0211 | 65 | 8 |
| | First peak position [°] | Li₂S crystallite size [nm] | Li₂S particle size [µm] |
| Pulverized Li₂S | 26.9270 | 15 | - |
| Li₂S-LiI composite (first step) | 26.6074 | 8.8 | less than 1 |
| Preparation Example 2 (Li₂S-LiI-CNF composite) | 26.7020 | 9.9 | less than 1 |

As shown in Table 1, the position of the first peak of the Li₂S-LiI-CNF composite of Preparation Example 2 for the (111) crystal plane appearing at a diffraction angle of 2θ = 27°±2.0° shifted to a lower angle compared to the position of the second peak of bare Li₂S for the (111) crystal plane appearing at a diffraction angle 2θ = 27°±2.0°.

The first diffraction angle of the first peak of the Li₂S-LiI-CNF composite of Example 1 was smaller than the second diffraction angle of the second peak of bare Li₂S. Accordingly, the crystallite size of the Li₂S-LiI-CNF composite of Example 1 was significantly reduced compared to the crystallite size of bare Li₂S. As shown in Table 1, the position of the first peak of the Li₂S-LiI-CNF composite and the first peak of the Li₂S-LiI composite shifted to a lower angle compared to the position of the first peak of pulverized Li₂S. Further, although not shown in Table 1, the first peak of the Li₂S-LiI-CNF composite had a first full width at half maximum (FWHM1), the second peak of bare Li₂S had a second full width at half maximum (FWHM2), and the first full width at half maximum was larger than the second full width at half maximum. The first full width at half maximum (FWHM1) was 1° or more.

As shown in Table 1, the particle size and crystallite size of the Li₂S-LiI composite were significantly reduced compared to those of Li₂S. Although not shown in Table 1, the lattice constant of the Li₂S-LiI composite was larger than the lattice constant of bare Li₂S. An increase in the lattice constant of the Li₂S-LiI composite compared to the lattice constant of bare Li₂S was determined to be due to the dissolution of LiI within the Li₂S crystal. Therefore, it was confirmed that the Li₂S-LiI composite forms a solid solution.

Although not shown in Table 1, the particle size of the composite of Example 1 was about 5 µm.

### Evaluation Example 2: Charge-discharge test

The charge-discharge characteristics of the all-solid-state secondary batteries of Examples 1 to 6 and Comparative Examples 1 to 3 were evaluated by the following charge-discharge test.

A charge-discharge test was performed by putting an all-solid-state secondary battery into a constant temperature chamber at 45°C.

In the first cycle, the all-solid-state secondary battery was charged with a constant current of 0.1 C for 12.5 hours until a battery voltage reached 2.5 V to 2.8 V. Subsequently, the all-solid-state secondary battery was discharged with a constant current of 0.1 C for 12.5 hours until the battery voltage reached 0.3 V.

The discharge capacity in the first cycle was taken as standard capacity. The standard capacity is expressed as specific capacity of Li₂S in Table 2 below.

After the second cycle, the all-solid-state secondary battery was charged and discharged up to 150 cycles under the same conditions as the first cycle. The measurement results are shown in Table 2 below. Initial efficiency is expressed by Equation 1 below. <Equation 1> 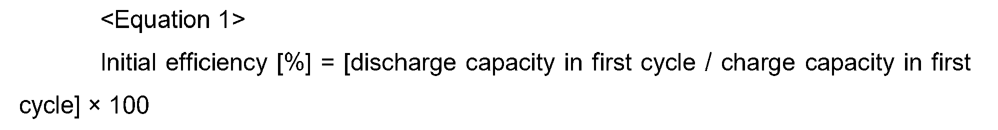 Initial efficiency [%] = [discharge capacity in first cycle / charge capacity in first cycle] × 100

The cycle number refers to the number of cycles required for the discharge capacity to decrease to 80% of the standard capacity after the second cycle. As the cycle number increases, it is considered that the all-solid-state has better lifespan characteristics.

**[Table 2]**

| Class. | Cathode/SE layer/Anode | Cathode capacity @ 0.1C (mAh/g) | Initial efficiency [%] | Number of cycles (times) |
|---|---|---|---|---|
| Example 1 | (Li₂ composite + LACO75 + binder)(60:39:1) cathode // sulfide-based SE layer // Ag-C anode-free | 950 | 89 | 480 |
| Example 2 | (Li₂ composiste + LACO75 + binder)(60:39:1) cathode // LACO SE layer // Ag-C anode-free | 850 | 87 | 280 |
| Example 3 | (Li₂ composite + LACO75 + binder) (60:39:1) cathode // garnet SE layer // Ag-C anode-free | 800 | 88 | 350 |
| Example 4 | (Li₂ composite + LACO75 + binder)(60:39:1) cathode // PEO layer // Ag-C anode-free | 710 | 82 | 150 |
| Example 5 | (Li₂S-composite + LACO75 + solid electrolyte + binder) (60:20:19:1.0) cathode // sulfide-based SE layer // Ag-C anode-free | 1050 | 92 | 580 |
| Example 6 | (Li₂ composite + LACO110 + binder) (60:39:1) cathode // sulfide-based SE layer // Ag-C anode-free | 890 | 89 | 420 |
| Comparative Example 1 | (Li₂S composite + sulfide-based SE) cathode // sulfide-based SE // Ag-C anode-free | 720 | 84 | 40 |
| Comparative Example 2 | (Li₂ composite + PEGDMA + binder) (60:39:1) cathode // sulfide-based SE layer // Ag-C anode-free | 700 | 82 | 40 |
| Comparative Example 3 | (Li₂ composite + LACO + binder) (60:39:1) cathode // sulfide-based SE layer // Ag-C anode-free, no heat treatment during cathode manufacturing | 350 | 79 | 15 |

As shown in Table 2, the all-solid-state secondary batteries of Examples 1 to 6 showed improved lifespan characteristics and high-rate characteristics compared to those of Comparative Examples 1 to 3. The all-solid-state secondary battery of Example 1 contains LACO in the cathode, which reduces the interfacial resistance between the cathode and the solid electrolyte layer and enhances the network of electrons and ions, thereby improving lifespan characteristics and high-rate characteristics. The all-solid-state secondary battery of Examples 1 to 6, particularly, the all-solid-state secondary battery manufactured according to Example 5, was provided with a cathode containing LACO and an argyrodite-type solid electrolyte, and showed the best results in lifespan characteristics with significantly improved ionic conductivity and electronic conductivity.

The all-solid-state secondary battery of Example 1 has a sulfide-based solid electrolyte layer, and thus showed the results of improved lifespan characteristics and high-rate characteristics, compared to those of the all-solid-state secondary battery of Example 2, which has a LACO solid electrolyte layer with low reduction stability at a low voltage of 1.5V or less and those of the all-solid-state secondary battery of Example 3, which has a garnet-type oxide solid electrolyte with lower ionic conductivity than the sulfide-based solid electrolyte.

In contrast, the all-solid-state secondary battery of Comparative Example 1 was provided with a cathode containing only lithium sulfide and a solid electrolyte, which have a large volume change during charging and discharging, and thus the interfacial resistance between the cathode and the solid electrolyte layer increases, thereby exhibiting deteriorated lifespan characteristics and high-rate characteristics compared to those of the all-solid-state secondary batteries of Examples 1 to 6. Further, the all-solid-state secondary battery of Comparative Example 2 was provided with a cathode containing PEGDMA, and thus the high-rate characteristics and lifespan characteristics thereof were poor due to the side reaction of PEGDMA with the cathode active material.

In addition, the all-solid-state secondary battery of Comparative Example 3 did not undergo a heat treatment process during the manufacturing of a cathode, so it could not obtain the additional effect of LACO and thus exhibited deteriorated high-rate characteristics and lifespan characteristics.

### Evaluation Example 3: Evaluation of high-rate characteristics

The high-rate characteristics of the all-solid-state secondary batteries manufactured in Examples 1 to 6 and Comparative Examples 1 to 3 were evaluated by the following charge-discharge test. A charge-discharge test was performed by putting an all-solid-state secondary battery into a constant temperature chamber at 45°C.

Each all-solid-state secondary battery was charged with a constant current of 0.1 C rate at 45°C until a voltage reached 2.5 V (vs. Li), and was then cut-off at a current of 0.05 C rate while maintaining 2.5 V in constant voltage mode. Subsequently, the all-solid-state secondary battery was discharged with a constant current of 0.05 C rate until the voltage reached 0.3 V (vs. Li) during discharging (formation cycle).

Each all-solid-state secondary battery was charged with a constant current of 0.1 C rate at 45°C until the voltage reached 2.5 V (vs. Li), and was then cut-off at a current of 0.05 C rate while maintaining 2.5 V in constant voltage mode. Subsequently, the all-solid-state secondary battery was discharged with a constant current of 0.05 C rate until the voltage reached 0.3 V (vs. Li) during discharging (first cycle).

The lithium battery having undergone the formation cycle was charged with a constant current of 0.2 C rate at 45°C until the voltage reached 2.5 V (vs. Li). Subsequently, the lithium battery was discharged with a constant current of 0.05 C rate until the voltage reached 0.3 V (vs. Li) during discharging (second cycle).

The lithium battery having undergone the first cycle was charged with a constant current of 0.2 C rate at 45°C until the voltage reached 2.5 V (vs. Li). Subsequently, the lithium battery was discharged with a constant current of 0.33 C rate until the voltage reached 0.3 V (vs. Li) during discharging (second cycle).

The lithium battery having undergone the second cycle was charged with a constant current of 0.2 C rate at 45°C until the voltage reached 2.5 V (vs. Li). Subsequently, the lithium battery was discharged with a constant current of 0.5 C rate until the voltage reached 0.3 V (vs. Li) during discharging (third cycle).

The lithium battery having undergone the third cycle was charged with a constant current of 0.2 C rate at 45°C until the voltage reached 2.5 V (vs. Li). Subsequently, the lithium battery was discharged with a constant current of 1.0 C rate until the voltage reached 0.3 V (vs. Li) during discharging (fourth cycle).

In every charge-discharge cycle, a 10-minute pause was provided after each charge-discharge cycle. Some of the results of the charge-discharge experiment at room temperature are shown in Table 4 below. High-rate characteristic is defined by Equation 2 below. <Equation 2> 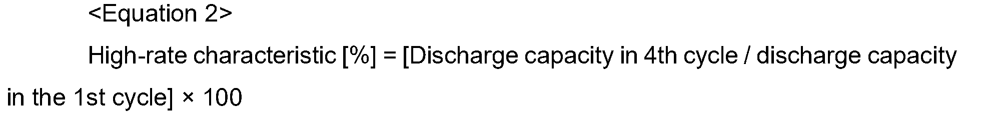 High-rate characteristic [%] = [Discharge capacity in 4th cycle / discharge capacity in the 1st cycle] × 100

**[Table 3]**

| Class. | Cathode/SE layer/anode | High-rate characteristics (1C/0.1C) [%] |
|---|---|---|
| Example 1 | (Li₂ composite + LACO75 + binder)(60:39:1) cathode // sulfide-based SE layer // Ag-C anode-free | 91 |
| Example 2 | (Li₂ composite + LACO75 + binder)(60:39:1) cathode // LACO SE layer // Ag-C anode-free | 89 |
| Example 3 | (Li₂ composite + LACO75 + binder) (60:39:1) cathode // garnet-type SE layer // Ag-C anode-free | 87 |
| Example 4 | (Li₂ composite + LACO75 + binder)(60:39:1) cathode // PEO layer // Ag-C anode-free | 82 |
| Comparative Example 1 | (Li₂S composite + sulfide-based SE) cathode // sulfide-based SE // Ag/C anode-free | 75 |

As shown in Table 3, the all-solid-state secondary batteries of Examples 1 to 4 showed improved high-rate characteristics compared to those of the all-solid-state secondary battery of Comparative Example 1. Additionally, although not shown in Table 2, the all-solid-state secondary batteries of Examples 5 and 6 exhibited high-rate characteristics that were further improved or equivalent to those of Examples.

## Claims

1. A cathode comprising: a cathode current collector; and
a cathode active material layer containing a lithium sulfide-based cathode active material and an inorganic filler and disposed on one side or both sides of the cathode current collector,
wherein the inorganic filler is a lithium metal oxyhalide represented by Formula 1 below:
<Formula 1> LiₐAl_{b}M_{c}O_{d}Clₑ
wherein in Formula 1, 0<a≤3, 0<b≤3, 0≤c<2, 0<d≤4, 0<e≤4, d<e, and M is a metal selected from Groups 3 to 15.

2. The cathode of claim 1, wherein the lithium metal oxyhalide includes LiₐAl_{b}O_{d}Clₑ (0<a≤3; 0<b≤3; 0<d≤2; 1<e≤4; d<e), LiₐAl_{b}Fe_{c}O_{d}Clₑ (0<a≤3; 0<b≤3; 0≤c<2; 0<d≤2; 1<e≤4; d<e), LiₐAl_{b}Ga_{c}O_{d}Clₑ (0<a≤3; 0<b≤3; 0≤c<2; 0<d≤2; 1<e≤4; d<e), LiₐAl_{b}In_{c}O_{d}Clₑ (0<a≤3; 0<b≤3; 0≤c<2; 0<d≤2; 1<e≤4; d<e), LiₐAl_{b}As_{c}O_{d}Clₑ (0<a≤3; 0<b≤3; 0≤c<2; 0<d≤2; 1<e≤4; d<e), LiₐAl_{b}Sb_{c}O_{d}Clₑ (0<a≤3; 0<b≤3; 0≤c<2; 0<d≤2; 1<e≤4; d<e), LiₐAl_{b}Mo_{c}O_{d}Clₑ (0<a≤3; 0<b≤3; 0≤c<2; 0<d≤2; 1<e≤4; d<e), LiₐAl_{b}Bi_{c}O_{d}Clₑ (0<a≤3; 0<b≤3; 0≤c<2; 0<d≤2; 1<e≤4; d<e), LiₐAl_{b}B_{c}O_{d}Clₑ (0<a≤3; 0<b≤3; 0≤c<2; 0<d≤2; 1<e≤4; d<e), or a combination thereof.

3. The all solid state secondary battery of claim 1, wherein the inorganic filler is amorphous or glassy, and the inorganic filler has a glass transition temperature of 20 °C or lower, a melting point of 200 °C or lower, and an elastic modulus of 10 GPa or less at 30 °C.

4. The cathode of claim 1, further comprising: an interlayer between the cathode current collector and the cathode active material layer,
wherein the interlayer is directly disposed on one side or both sides of the cathode current collector, and a thickness of the interlayer is 20 % or less of a thickness of the cathode current collector.

5. The cathode of claim 4, wherein the interlayer is made of a carbon-based conductive material or includes a carbon-based material and a binder.

6. The cathode of claim 1, wherein the cathode current collector is inert to the inorganic filler, and the cathode current collector includes tungsten (W).

7. The cathode of claim 1, wherein the lithium sulfide-based cathode active material is Li₂S, a Li₂S composite, or a combination thereof.

8. The cathode of claim 7, wherein the Li₂S composite is a composite of Li₂S and a lithium salt, a composite of Li₂S and a carbon-based material, a composite of Li₂S, a carbon-based material and a solid electrolyte, a composite of Li₂S and a solid electrolyte, a composite of Li₂S, a carbon-based material and a lithium salt, a composite of Li₂S and a lithium salt, a composite of Li₂S and a metal carbide, a composite of Li₂S, a carbon-based material and a metal carbide, a composite of Li₂S and a metal nitride, a composite of Li₂S, a carbon-based material and a metal nitride, or a combination thereof.

9. The cathode of claim 7, wherein the Li₂S composite includes a solid solution of Li₂S and a lithium salt, and
a size of Li₂S crystallites obtained from an XRD spectrum of the composite is 20 nm or less.

10. The cathode of claim 7, wherein the Li₂S composite is a composite of Li₂S, LiI, and a carbon-based material, a size of Li₂S crystallites obtained from an XRD spectrum of the composite is less than 9.9 nm, and the composite includes a solid solution of Li₂S and LiI.

11. The cathode of claim 1, wherein a content of the inorganic filler in the cathode active material layer is 1 to 40 wt% based on a total weight of the cathode active material layer.

12. The cathode of claim 1, wherein the cathode active material layer further includes at least one selected from a binder, a conductive material, and a lithium salt.

13. The cathode of claim 12, wherein the conductive material includes a carbon-based material,
the carbon-based material is amorphous,
the carbon-based material includes a fibrous carbon-based material,
the fibrous carbon-based material includes fibrous carbon nanostructures, and
the fibrous carbon nanostructures include carbon nanofibers, carbon nanotubes, carbon nanobelts, carbon nanorods, or a combination thereof.

14. The cathode of claim 1, wherein the cathode active material layer further includes a first solid electrolyte,
the first solid electrolyte includes a sulfide-based solid electrolyte,
the sulfide-based solid electrolyte is at least one selected from Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are each a positive number, and Z is one of Ge, Zn, and Ga), Li₂S-GeS₂, Li₂S-SiS₂-Li₃PO₄, Li₂S-SiS₂-LiₚMO_{q} (p and q are each a positive number, and M is one of P, Si, Ge, B, Al, Ga, and In), Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2),
the sulfide-based solid electrolyte includes an argyrodite-type solid electrolyte, and
the argyrodite-type solid electrolyte includes at least one selected from Li₆PS₅Cl, Li₆PS₅Br, and Li₆PS₅I, and the argyrodite-type solid electrolyte has a density of 1.5 to 2.0 g/cc.

15. An all-solid-state secondary battery comprising: a cathode layer; an anode layer; and an electrolyte layer between the cathode layer and the anode layer,
wherein the cathode layer is the cathode of any one of claims 1 to 14.

16. The all-solid-state secondary battery of claim 15, wherein the anode layer includes an anode current collector and a first anode active material layer on the anode current collector,
the first anode active material layer includes an anode active material and a binder,
the anode active material has a particle shape, and an average particle size of the anode active material is 4 µm or less, and
the anode active material includes at least one selected from carbon-based anode active materials and metal or metalloid anode active materials.

17. The all-solid-state secondary battery of claim 16, wherein the carbon-based anode active material includes amorphous carbon, crystalline carbon, porous carbon, or a combination thereof, and
the metal or metalloid anode active material includes gold (Au), platinum (Pt), palladium (Pd), silicon (Si), silver (Ag), aluminum (Al), bismuth (Bi), tin (Sn), zinc (Zn), or a combination thereof.

18. The all-solid-state secondary battery of claim 16, wherein the anode active material includes a mixture of first particles made of amorphous carbon and second particles made of a metal or metalloid,
a content of the second particles is 1 to 60 wt% based on a total weight of the mixture,
the anode layer further includes a second anode active material layer disposed between the anode current collector and/or the first anode active material layer and between the anode current collector and the electrolyte layer, and
the second anode active material layer is a metal layer, and the metal layer includes lithium or a lithium alloy.

19. The all-solid-state secondary battery of claim 15, wherein the solid electrolyte layer includes a solid electrolyte or a combination of a solid electrolyte and a gel electrolyte,
the solid electrolyte includes a sulfide-based solid electrolyte, an oxide-based solid electrolyte, a polymer solid electrolyte, or a combination thereof, and
the gel electrolyte includes a polymer gel electrolyte.

20. The all-solid-state secondary battery of claim 15, wherein the anode layer includes an anode current collector,
at least one of the cathode current collector and the anode current collector includes a base film and a metal layer disposed on one side or both sides of the base film,
the base film includes a polymer, the polymer includes polyethylene terephthalate (PET), polyethylene (PE), polypropylene (PP), polybutylene terephthalate (PBT), polyimide (PI), or a combination thereof, and
the metal layer includes indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.
